(19) **Europäisches Patentamt**
**European Patent Office**
**Office européen des brevets**

(11) **EP 3 893 080 B1**

(12) **FASCICULE DE BREVET EUROPEEN**

(45) Date de publication et mention
de la délivrance du brevet:
**06.09.2023 Bulletin 2023/36**

(21) Numéro de dépôt: **21157387.8**

(22) Date de dépôt: **16.02.2021**

(51) Classification Internationale des Brevets (IPC):
**G06F 1/12** *(2006.01)*     **G05D 1/00** *(2006.01)*

(52) Classification Coopérative des Brevets (CPC):
**G06F 1/12; G05B 9/03; G05D 1/0077**

(54) **PROCÉDÉ ET SYSTÈME DE SYNCHRONISATION DE CALCULATEURS**

VERFAHREN UND SYSTEM ZUR SYNCHRONISIERUNG VON RECHNERN

SYNCHRONISATION METHOD AND SYSTEM FOR COMPUTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2020 FR 2003475**

(43) Date de publication de la demande:
**13.10.2021 Bulletin 2021/41**

(73) Titulaire: **Airbus Operations SAS
31060 Toulouse (FR)**

(72) Inventeurs:
- **VALADEAU, Pierre
  31060 Toulouse (FR)**
- **BOITREL, Matthieu
  31060 Toulouse (FR)**

(74) Mandataire: **Gevers & Orès
Immeuble le Palatin 2
3 Cours du Triangle
CS 80165
92939 Paris La Défense Cedex (FR)**

(56) Documents cités:
**EP-A1- 2 717 108**     **EP-A2- 0 306 211**

**Description**

DOMAINE TECHNIQUE

La présente invention concerne la synchronisation de calculateurs. En particulier, elle concerne un procédé et un système permettant de synchroniser deux calculateurs prévus notamment pour commander des gouvernes d'aéronef.

ÉTAT DE LA TECHNIQUE

Les aéronefs actuels, en particulier les avions de transport, comportent un ensemble de calculateurs de commande de vol qui calculent des ordres de commande d'actionneurs de gouvernes de l'aéronef. Les calculateurs de commande de vol sont dissimilaires et redondants de telle façon que le système de commande de vol soit robuste à des pannes susceptibles d'affecter certains calculateurs. De plus, plus généralement, une partie des calculateurs sont utilisés en mode commande (COM) et une autre partie des calculateurs sont utilisés en mode surveillance (MON). Un calculateur en mode surveillance surveille le fonctionnement d'un calculateur en mode commande. Les calculateurs sont ainsi répartis selon des couples COM/MON.

Le document EP 19206101.8 décrit un système de commande de vol d'un aéronef. Ce système de commande de vol comprend un ensemble de dispositifs calculateurs d'ordre de commande de vol et un ensemble d'actionneurs de contrôle de l'aéronef. Ces dispositifs calculateurs comprennent deux modules similaires. Un module correspond à un calculateur agissant en mode commande et l'autre module correspond à un calculateur agissant en mode surveillance. La synchronisation des deux calculateurs est nécessaire afin de permettre une mise en oeuvre des lois de pilotage automatique de manière robuste.

Le document EP 2 717 108 A1 décrit un système de calcul pour des commandes de vol selon l'art antérieur.

EXPOSÉ DE L'INVENTION

La présente invention a pour objet de pallier ce problème en proposant un système et un procédé de synchronisation d'un premier calculateur et d'un deuxième calculateur.

À cet effet, l'invention concerne un procédé de synchronisation d'un premier calculateur et d'un deuxième calculateur, chacun des calculateurs étant configuré pour calculer des ordres de commande destinés à commander un actionneur de gouverne d'un aéronef selon une même loi de pilotage, chacun des calculateurs comprenant une horloge synchronisée l'une avec l'autre, le premier calculateur présentant une avance ou un retard par rapport au deuxième calculateur, l'avance et le retard étant inconnu et temporellement borné.

Selon l'invention, le procédé comprend un ensemble d'étapes mis en oeuvre de manière itérative, l'ensemble d'étapes mis en oeuvre à chaque itération n comportant :

- une étape de calcul, mise en oeuvre par un module de calcul, consistant à ce que chacun des calculateurs calcule un bit, le bit étant égal à 0 si l'ordre de commande $Ia(n)$, $Ib(n)$ calculé par chacun des calculateurs à l'itération n est égal à l'ordre de commande $Ia(n - 1)$, $Ib(n - 1)$ calculé à l'itération n-1, sinon le bit étant égal à 1 ;
- une étape d'échange, mise en oeuvre par un module d'échange, consistant à ce que chacun des calculateurs s'échange le bit calculé ;
- une étape de détermination d'une paire signal, mise en oeuvre par un module de détermination de paire signal, consistant à ce que chacun des calculateurs détermine une paire signal de bits

$$Sa(n) = \begin{Bmatrix} sa0 \\ sa1 \end{Bmatrix}, Sb(n) = \begin{Bmatrix} sb0 \\ sb1 \end{Bmatrix}$$ , la paire signal de bits $Sa(n)$, $Sb(n)$ comprenant le bit calculé par chacun des calculateurs ;

- une étape de détermination de paire produit, mise en oeuvre par un module de détermination de paire produit, consistant à ce que chacun des calculateurs détermine une paire produit de bits

$$Pa(n) = \begin{Bmatrix} pa0 \\ pa1 \end{Bmatrix}, Pb(n) = \begin{Bmatrix} pb0 \\ pb1 \end{Bmatrix}$$ , la paire produit de bits $Pa(n)$, $Pb(n)$ indiquant quel bit égal à 1 de la paire signal de bits $Sa(n)$, $Sb(n)$ déterminée pour l'un des calculateurs à l'itération n est égal au bit de la paire signal de bits $Sa(n - 1)$, $Sb(n - 1)$ déterminée pour l'autre des calculateurs à l'itération n-1 ;

- une étape de détermination de paire reste, mise en oeuvre par un module de détermination de paire reste, consistant à ce que chacun des calculateurs détermine une paire reste de bits $$Ra(n) = \begin{Bmatrix} ra0 \\ ra1 \end{Bmatrix}, Rb(n) = \begin{Bmatrix} rb0 \\ rb1 \end{Bmatrix}$$ , la

paire reste de bits *Ra(n), Rb(n)* indiquant quel bit égal à 1 de la paire signal de bits *Sa(n), Sb(n)* déterminée pour l'un des calculateurs à l'itération n est différent du bit de la paire signal de bits *Sa(n - 1), Sb(n - 1)* déterminée pour l'autre des calculateurs à l'itération n-1 ;

- une étape de détermination de signal synchronisé, mise en oeuvre par un module de détermination de signal synchronisé, consistant à ce que chacun des calculateurs détermine un signal synchronisé à partir de la paire produit de bits *Pa(n), Pb(n)* et de la paire reste de bits *Ra(n), Rb(n)* ;

l'étape de détermination de signal synchronisé comprenant les sous-étapes suivantes :

- une sous-étape de détermination, mise en oeuvre par un sous-module de détermination (7A) du module de détermination de signal synchronisé compris dans le premier calculateur, consistant à déterminer un premier signal synchronisé *Oa(n)*,

  - si $Pa(n) = \begin{Bmatrix} 0 \\ 0 \end{Bmatrix}$, le premier signal synchronisé *Oa(n)* est égal au premier signal synchronisé *Oa(n - 1)* à l'itération n-1,

  - si $Pa(n) \neq \begin{Bmatrix} 0 \\ 0 \end{Bmatrix}$ et si *ra0*= 0, le premier signal synchronisé *Oa(n)* est égal à l'ordre de commande *Ia(n - 1)* calculé par le premier calculateur à l'itération n-1,

  - si $Pa(n) \neq \begin{Bmatrix} 0 \\ 0 \end{Bmatrix}$ et si *ra0* = 1, le premier signal synchronisé *Oa(n)* est égal à l'ordre de commande *Ia(n - 2)* calculé par le premier calculateur à l'itération n-2 ;

- une sous-étape de détermination, mise en oeuvre par un sous-module de détermination (7B) du module de détermination de signal synchronisé compris dans le deuxième calculateur, consistant à déterminer un deuxième signal synchronisé *Ob(n)*,

  - si $Pb(n) = \begin{Bmatrix} 0 \\ 0 \end{Bmatrix}$, le deuxième signal synchronisé *Ob(n)* est égal au deuxième signal synchronisé *Ob(n - 1)* à l'itération n-1,

  - si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n - 1)* calculé par le deuxième calculateur à l'itération n-1,

  - si $Pb(n) \neq \begin{Bmatrix} 0 \\ 0 \end{Bmatrix}$ et si *rb0* = 1, le deuxième signal synchronisé *Ob(n)* est égal à l'ordre de commande *Ib(n - 2)* calculé par le deuxième calculateur à l'itération n-2.

Ainsi, grâce au procédé, les ordres de commandes calculés par les deux calculateurs sont synchronisés.

De plus, l'étape de calcul comprend les sous-étapes suivantes :

- une première sous-étape de calcul, mise en oeuvre par un premier sous-module de calcul du premier calculateur, consistant à calculer un premier bit, le premier bit étant égal à 0 si l'ordre de commande *Ia(n)* calculé par le premier calculateur à l'itération n est égal à l'ordre de commande *Ia(n - 1)* calculé à l'itération n-1, sinon le premier bit étant égal à 1 ;

- une deuxième sous-étape de calcul, mise en oeuvre par un deuxième sous-module de calcul du deuxième calculateur, consistant à calculer un deuxième bit, le deuxième bit étant égal à 0 si l'ordre de commande *Ib(n)* calculé par le deuxième calculateur à l'itération n est égal à l'ordre de commande *Ib(n - 1)* calculé à l'itération n-1, sinon le deuxième bit étant égal à 1.

En outre, l'étape d'échange comprend les sous-étapes suivantes :

- une première sous-étape de transmission, mise en oeuvre par un premier sous-module de transmission du premier calculateur, consistant à transmettre au deuxième calculateur le premier bit ;

- une deuxième sous-étape de transmission, mise en oeuvre par un deuxième sous-module de transmission du deuxième calculateur, consistant à transmettre au premier calculateur le deuxième bit.

Par ailleurs, l'étape de détermination de paire signal comprend les sous-étapes suivantes :

- une sous-étape de détermination, mise en oeuvre par un sous-module de détermination (4A) du premier calculateur,

$$Sa(n) = \begin{Bmatrix} sa0 \\ sa1 \end{Bmatrix}$$

consistant à déterminer une première paire signal de bits dans laquelle *sa*0 est un bit propre égal au premier bit calculé à l'itération n-1 et *sa*1 est un bit opposé égal au deuxième bit calculé à l'itération n-1 ;
- une sous-étape de détermination, mise en oeuvre par un sous-module de détermination (4B) du deuxième calcu-

$$Sb(n) = \begin{Bmatrix} sb0 \\ sb1 \end{Bmatrix}$$

lateur, consistant à déterminer une deuxième paire signal de bits dans laquelle *sb0* est un bit propre égal au deuxième bit calculé à l'itération n-1 et *sb1* est un bit opposé égal au premier bit calculé à l'itération n-1.

Selon une particularité, l'étape de détermination de paire produit comprend les sous-étapes suivantes :

- une sous-étape de détermination, mise en oeuvre par un sous-module de détermination (5A) du premier calculateur,

$$Pa(n) = \begin{Bmatrix} pa0 \\ pa1 \end{Bmatrix}$$

consistant à déterminer une première paire produit de bits dans laquelle *pa*0 est un bit propre et *pa*1 est un bit opposé,

- $Pa(n) = \begin{Bmatrix} 1 \\ 1 \end{Bmatrix}$ si $\left( Ra(n-1) = \begin{Bmatrix} 1 \\ 1 \end{Bmatrix} \text{ ou } Ra(n-1) = \begin{Bmatrix} 0 \\ 0 \end{Bmatrix} \right)$ et $Sa(n) = \begin{Bmatrix} 1 \\ 1 \end{Bmatrix}$, *Ra(n* - 1) correspondant à une paire reste de bits déterminée à l'itération n-1,

- $Pa(n) = \begin{Bmatrix} 1 \\ 0 \end{Bmatrix}$ si $\left( Ra(n-1) = \begin{Bmatrix} 0 \\ 1 \end{Bmatrix} \text{ et } Sa(n) = \begin{Bmatrix} 1 \\ 1 \end{Bmatrix} \right)$ ou $\left( Ra(n - 1) = \begin{Bmatrix} 0 \text{ ou } 1 \\ 1 \end{Bmatrix} \text{ et } Sa(n) = \begin{Bmatrix} 1 \\ 0 \end{Bmatrix} \right)$,

- $Pa(n) = \begin{Bmatrix} 0 \\ 1 \end{Bmatrix}$ si $\left( Ra(n-1) = \begin{Bmatrix} 1 \\ 0 \end{Bmatrix} \text{ et } Sa(n) = \begin{Bmatrix} 1 \\ 1 \end{Bmatrix} \right)$ ou $\left( Ra(n - 1) = \begin{Bmatrix} 1 \\ 1 \text{ ou } 0 \end{Bmatrix} \text{ et } Sa(n) = \begin{Bmatrix} 0 \\ 1 \end{Bmatrix} \right)$,

- sinon $Pa(n) = \begin{Bmatrix} 0 \\ 0 \end{Bmatrix}$ ;

- une sous-étape de determination, mise en oeuvre par un sous-module de détermination (5B) du deuxième calcu-

$$Pb(n) = \begin{Bmatrix} pb0 \\ pb1 \end{Bmatrix}$$

lateur, consistant à déterminer une deuxième paire produit de bits dans laquelle *pb*0 est un bit propre et *pb1* est un bit opposé,

- $Pb(n) = \begin{Bmatrix} 1 \\ 1 \end{Bmatrix}$ si $\left( Rb(n-1) = \begin{Bmatrix} 1 \\ 1 \end{Bmatrix} \text{ ou } Rb(n-1) = \begin{Bmatrix} 0 \\ 0 \end{Bmatrix} \right)$ et $Sb(n) = \begin{Bmatrix} 1 \\ 1 \end{Bmatrix}$, *Rb(n* - 1) correspondant à une paire reste de bits déterminée à l'itération n-1,

- $Pb(n) = \begin{Bmatrix} 1 \\ 0 \end{Bmatrix}$ si $\left( Rb(n-1) = \begin{Bmatrix} 0 \\ 1 \end{Bmatrix} \text{ et } Sb(n) = \begin{Bmatrix} 1 \\ 1 \end{Bmatrix} \right)$ ou $\left( Rb(n - 1) = \begin{Bmatrix} 0 \text{ ou } 1 \\ 1 \end{Bmatrix} \text{ et } Sb(n) = \begin{Bmatrix} 1 \\ 0 \end{Bmatrix} \right)$,

- $Pb(n) = \begin{Bmatrix} 0 \\ 1 \end{Bmatrix}$ si $Rb(n-1) = \begin{Bmatrix} 1 \\ 0 \end{Bmatrix}$ et $Sb(n) = \begin{Bmatrix} 1 \\ 1 \end{Bmatrix}$ ou $\left( Rb(n - 1) = \begin{Bmatrix} 1 \\ 1 \text{ ou } 0 \end{Bmatrix} \text{ et }\right.$

$$Sb(n) = \begin{Bmatrix} 0 \\ 1 \end{Bmatrix} \Big) ,$$

- sinon $Pb(n) = \begin{Bmatrix} 0 \\ 0 \end{Bmatrix}$ .

Selon une autre particularité, l'étape de détermination de paire reste comprend les sous-étapes suivantes :

- une sous-étape de détermination, mise en oeuvre par un sous-module de détermination (6A) du premier calculateur, consistant à déterminer une première paire reste de bits $Ra(n) = \begin{Bmatrix} ra0 \\ ra1 \end{Bmatrix}$ dans laquelle *ra*0 est un bit propre, *ra*1 est un bit opposé et *Ra(n) = Sa(n)* XOR *Pa(n)* ;
- une sous-étape de détermination, mise en oeuvre par un sous-module de détermination (6B) du deuxième calculateur, consistant à déterminer une deuxième paire reste de bits $Rb(n) = \begin{Bmatrix} rb0 \\ rb1 \end{Bmatrix}$ dans laquelle *rb0* est un bit propre, *rb1* est un bit opposé et *Rb(n) = Sb(n)* XOR *Pb*(*n*).

L'invention concerne également un ensemble selon la revendication 7.
Selon l'invention, l'ensemble comprend le premier calculateur, le deuxième calculateur et un ensemble de modules mis en oeuvre de manière itérative, l'ensemble de modules mis en oeuvre à chaque itération n comportant :

- un module de calcul configuré pour que chacun des calculateurs calcule un bit, le bit étant égal à 0 si l'ordre de commande *Ia(n), Ib(n)* calculé par chacun des calculateurs à l'itération n est égal à l'ordre de commande *Ia(n - 1), Ib(n - 1)* calculé à l'itération n-1, sinon le bit étant égal à 1 ;
- un module d'échange configuré pour que chacun des calculateurs s'échange le bit calculé ;
- un module de détermination de paire signal configuré pour que chacun des calculateurs détermine une paire signal de bits $Sa(n) = \begin{Bmatrix} sa0 \\ sa1 \end{Bmatrix}, Sb(n) = \begin{Bmatrix} sb0 \\ sb1 \end{Bmatrix}$ , la paire signal de bits *Sa(n), Sb(n)* comprenant le bit calculé par chacun des calculateurs ;
- un module de détermination de paire produit configuré pour que chacun des calculateurs détermine une paire produit de bits $Pa(n) = \begin{Bmatrix} pa0 \\ pa1 \end{Bmatrix}, Pb(n) = \begin{Bmatrix} pb0 \\ pb1 \end{Bmatrix}$ , la paire produit de bits *Pa(n), Pb(n)* indiquant quel bit égal à 1 de la paire signal de bits *Sa(n), Sb(n)* déterminée pour l'un des calculateurs à l'itération n est égal au bit de la paire signal de bits *Sa(n - 1), Sb(n - 1)* déterminée pour l'autre des calculateurs à l'itération n-1 ;
- un module de détermination de paire reste configuré pour que chacun des calculateurs détermine une paire reste de bits $Ra(n) = \begin{Bmatrix} ra0 \\ ra1 \end{Bmatrix}, Rb(n) = \begin{Bmatrix} rb0 \\ rb1 \end{Bmatrix}$ , la paire reste de bits *Ra(n), Rb(n)* indiquant quel bit égal à 1 de la paire signal de bits *Sa(n), Sb(n)* déterminée pour l'un des calculateurs à l'itération n est différent du bit de la paire signal de bits *Sa(n - 1), Sb(n - 1)* déterminée pour l'autre des calculateurs à l'itération n-1 ;
- un module de détermination de signal synchronisé configuré pour que chacun des calculateurs détermine un signal synchronisé à partir de la paire produit de bits *Pa(n), Pb(n)* et de la paire reste de bits *Ra(n), Rb(n),*

le module de détermination de signal synchronisé comprenant les sous-modules suivants :

- un sous-module de détermination (7A) du premier calculateur configuré pour déterminer un premier signal synchronisé *Oa(n),*
  - si $Pa(n) = \begin{Bmatrix} 0 \\ 0 \end{Bmatrix}$ , le premier signal synchronisé *Oa(n)* est égal au premier signal synchronisé *Oa(n - 1)* à l'itération n-1,
  - si $Pa(n) \neq \begin{Bmatrix} 0 \\ 0 \end{Bmatrix}$ et si *ra0* = 0, le premier signal synchronisé *Oa(n)* est égal à l'ordre de commande *Ia(n - 1)*

calculé par le premier calculateur à l'itération n-1,

- si $Pa(n) \neq \begin{Bmatrix} 0 \\ 0 \end{Bmatrix}$ et si *ra0* = 1, le premier signal synchronisé *Oa(n)* est égal à l'ordre de commande *Ia(n - 2)* calculé par le premier calculateur à l'itération n-2 ;

- un sous-module de détermination (7B) du deuxième calculateur configuré pour déterminer un deuxième signal synchronisé *Ob(n)*,

- si $Pb(n) = \begin{Bmatrix} 0 \\ 0 \end{Bmatrix}$, le deuxième signal synchronisé *Ob(n)* est égal au deuxième signal synchronisé *Ob(n - 1)* à l'itération n-1,

- si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n - 1)* calculé par le deuxième calculateur à l'itération n-1,

- si $Pb(n) \neq \begin{Bmatrix} 0 \\ 0 \end{Bmatrix}$ et si *rb0* = 1, le deuxième signal synchronisé *Ob(n)* est égal à l'ordre de commande *Ib(n - 2)* calculé par le deuxième calculateur à l'itération n-2..

De plus, le module de calcul comprend les sous-modules suivants :

- un premier sous-module de calcul du premier calculateur configuré pour calculer un premier bit, le premier bit étant égal à 0 si l'ordre de commande *Ia(n)* calculé par le premier calculateur à l'itération n est égal à l'ordre de commande *Ia(n - 1)* calculé à l'itération n-1, sinon le premier bit étant égal à 1 ;
- un deuxième sous-module de calcul du deuxième calculateur configuré pour calculer un deuxième bit, le deuxième bit étant égal à 0 si l'ordre de commande *Ib(n)* calculé par le deuxième calculateur à l'itération n est égal à l'ordre de commande *Ib(n - 1)* calculé à l'itération n-1, sinon le deuxième bit étant égal à 1.

En outre, le module d'échange comprend les sous-modules suivants :

- un premier sous-module de transmission du premier calculateur configuré pour transmettre au deuxième calculateur le premier bit ;
- un deuxième sous-module de transmission du deuxième calculateur configuré pour transmettre au premier calculateur le deuxième bit.

Par ailleurs, le module de détermination de paire signal comprend les sous-modules suivants :

- un sous-module de détermination (4A) du premier calculateur configuré pour déterminer une première paire signal de bits $Sa(n) = \begin{Bmatrix} sa0 \\ sa1 \end{Bmatrix}$ dans laquelle *sa0* est un premier bit propre égal au premier bit calculé à l'itération n-1 et *sa1* est un deuxième bit opposé égal au deuxième bit calculé à l'itération n-1 ;
- un sous-module de détermination (4B) du deuxième calculateur configuré pour déterminer une deuxième paire signal de bits $Sb(n) = \begin{Bmatrix} sb0 \\ sb1 \end{Bmatrix}$ dans laquelle *sb0* est un deuxième bit propre égal au deuxième bit calculé à l'itération n-1 et *sb1* est un premier bit opposé égal au premier bit calculé à l'itération n-1.

Selon une particularité, le module de détermination de paire produit comprend les sous-modules suivants :

- un sous-module de détermination (5A) du premier calculateur configuré pour déterminer une première paire produit de bits $Pa(n) = \begin{Bmatrix} pa0 \\ pa1 \end{Bmatrix}$ dans laquelle *pa*0 est un bit propre et *pa*1 est un bit opposé,

- $Pa(n) = \begin{Bmatrix} 1 \\ 1 \end{Bmatrix}$ si ( $Ra(n - 1) = \begin{Bmatrix} 1 \\ 1 \end{Bmatrix}$ ou $Ra(n - 1) = \begin{Bmatrix} 0 \\ 0 \end{Bmatrix}$ ) et $Sa(n) = \begin{Bmatrix} 1 \\ 1 \end{Bmatrix}$, *Ra(n - 1)* correspondant à une paire reste de bits déterminée à l'itération n-1,

- $Pa(n) = \begin{Bmatrix} 1 \\ 0 \end{Bmatrix}$ si ( $Ra(n-1) = \begin{Bmatrix} 0 \\ 1 \end{Bmatrix}$ et $Sa(n) = \begin{Bmatrix} 1 \\ 1 \end{Bmatrix}$ ) ou $(Ra(n-1) = \begin{Bmatrix} 0 \text{ ou } 1 \\ 1 \end{Bmatrix}$ et $Sa(n) = \begin{Bmatrix} 1 \\ 0 \end{Bmatrix}$ ),

- $Pa(n) = \begin{Bmatrix} 0 \\ 1 \end{Bmatrix}$ si ( $Ra(n-1) = \begin{Bmatrix} 1 \\ 0 \end{Bmatrix}$ et $Sa(n) = \begin{Bmatrix} 1 \\ 1 \end{Bmatrix}$ ) ou $(Ra(n-1) = \begin{Bmatrix} 1 \\ 1 \text{ ou } 0 \end{Bmatrix}$ et $Sa(n) = \begin{Bmatrix} 0 \\ 1 \end{Bmatrix}$ ),

- sinon $Pa(n) = \begin{Bmatrix} 0 \\ 0 \end{Bmatrix}$ ;

- un sous-module de détermination (5B) du deuxième calculateur configuré pour déterminer une deuxième paire produit de bits $Pb(n) = \begin{Bmatrix} pb0 \\ pb1 \end{Bmatrix}$ dans laquelle *pb0* est un bit propre et *pb1* est un bit opposé,

  - $Pb(n) = \begin{Bmatrix} 1 \\ 1 \end{Bmatrix}$ si ( $Rb(n-1) = \begin{Bmatrix} 1 \\ 1 \end{Bmatrix}$ ou $Rb(n-1) = \begin{Bmatrix} 0 \\ 0 \end{Bmatrix}$ ) et $Sb(n) = \begin{Bmatrix} 1 \\ 1 \end{Bmatrix}$, *Rb(n* - 1) correspondant à une paire reste de bits déterminée à l'itération n-1,

  - $Pb(n) = \begin{Bmatrix} 1 \\ 0 \end{Bmatrix}$ si ( $Rb(n-1) = \begin{Bmatrix} 0 \\ 1 \end{Bmatrix}$ et $Sb(n) = \begin{Bmatrix} 1 \\ 1 \end{Bmatrix}$ ) ou $(Rb(n-1) = \begin{Bmatrix} 0 \text{ ou } 1 \\ 1 \end{Bmatrix}$ et $Sb(n) = \begin{Bmatrix} 1 \\ 0 \end{Bmatrix}$ ),

  - $Pb(n) = \begin{Bmatrix} 0 \\ 1 \end{Bmatrix}$ si ( $Rb(n-1) = \begin{Bmatrix} 1 \\ 0 \end{Bmatrix}$ et $Sb(n) = \begin{Bmatrix} 1 \\ 1 \end{Bmatrix}$ ) ou $(Rb(n-1) = \begin{Bmatrix} 1 \\ 1 \text{ ou } 0 \end{Bmatrix}$ et $Sb(n) = \begin{Bmatrix} 0 \\ 1 \end{Bmatrix}$ ),

  - sinon $Pb(n) = \begin{Bmatrix} 0 \\ 0 \end{Bmatrix}$.

Selon une autre particularité, le module de détermination de paire reste comprend les sous-modules suivants :

- un sous-module de détermination (6A) du premier calculateur configuré pour déterminer une première paire reste de bits $Ra(n) = \begin{Bmatrix} ra0 \\ ra1 \end{Bmatrix}$ dans laquelle *ra0* est un bit propre, *ra1* est un bit opposé et *Ra(n) = Sa(n)* XOR *Pa(n)* ;
- un sous-module de détermination (6B) du deuxième calculateur configuré pour déterminer une deuxième paire reste de bits $Rb(n) = \begin{Bmatrix} rb0 \\ rb1 \end{Bmatrix}$ dans laquelle *rb0* est un bit propre, *rb1* est un bit opposé et *Rb(n) = Sb(n)* XOR *Pb(n)*. L'invention concerne aussi un système de commande de vol d'un aéronef, comprenant au moins un ensemble selon la revendication 7.

L'invention concerne également un aéronef, en particulier un avion de transport, comportant un système de commande de vol tel que celui spécifié ci-dessus.

BRÈVE DESCRIPTION DES FIGURES

L'invention, avec ses caractéristiques et avantages, ressortira plus clairement à la lecture de la description faite en référence aux dessins annexés dans lesquels :

La figure 1 montre une représentation schématique du système de synchronisation.

La figure 2 montre une représentation schématique du procédé de synchronisation.

La figure 3 illustre schématiquement un exemple du fonctionnement du système de synchronisation.

La figure 4 représente une séquence d'échange de bits entre les deux calculateurs.

La figure 5 représente un aéronef embarquant un système de commande de vol comprenant le système de synchronisation.

## DESCRIPTION DÉTAILLÉE

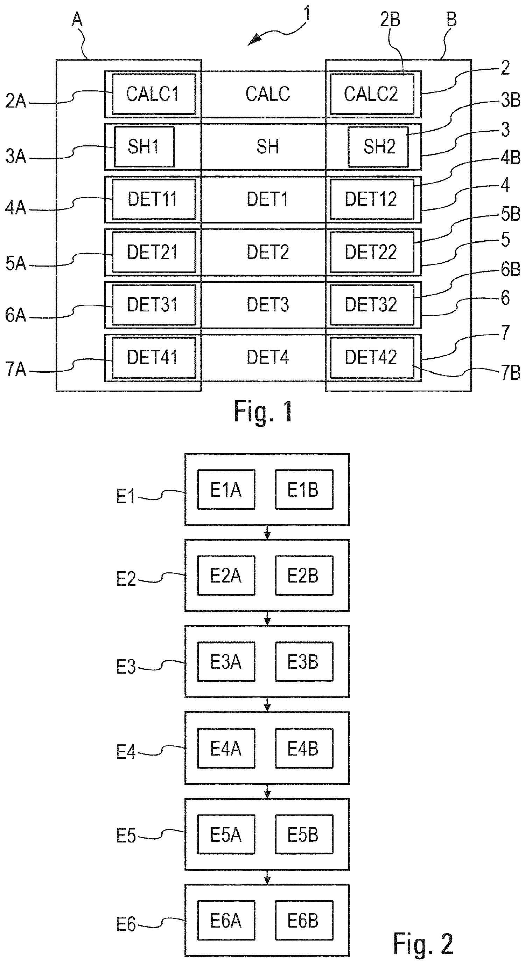

La figure 1 représente le système 1 de synchronisation d'un calculateur A et d'un calculateur B. Dans la suite de la description, le système de synchronisation est appelé « système 1 ».

Le système 1 est destiné à être embarqué à bord d'un aéronef AC dans un système de commande vol.

Chacun des calculateurs A, B est configuré pour calculer des ordres de commande destinés à commander un actionneur de gouverne d'un aéronef AC à partir d'une même loi de pilotage. Chacun des calculateurs A, B comprend une horloge synchronisée l'une avec l'autre. Le calculateur A présente une avance ou un retard par rapport au calculateur B. L'avance ou le retard d'un calculateur A ou B par rapport à l'autre calculateur B ou A est inconnu. Toutefois cette avance ou ce retard est temporellement borné. Cela signifie que l'avance ou le retard est inférieur à un temps de décalage maximal *Tsync.* Ce temps de décalage maximal *Tsync* est défini ci-après dans la description.

Le système 1 comprend un ensemble de modules mis en oeuvre de manière itérative.

L'ensemble de modules mis en oeuvre pour une itération n comporte au moins :

- un module de calcul CALC (CALC pour « calculating module » en anglais) 2,
- un module d'échange SH (SH pour « sharing module » en anglais) 3,
- un module de détermination de paire signal DET1 (DET pour « détermination module » en anglais) 4,
- un module de détermination de paire produit DET2 5,
- un module de détermination de paire reste DET3 6 et
- un module de détermination de signal synchronisé DET4 7.

Le module de calcul 2 est configuré pour que chacun des calculateurs A, B calcule un bit (ou booléen). Ce bit est égal à 0 si l'ordre de commande calculé par chacun des calculateurs A, B à l'itération n est égal à l'ordre de commande calculé à l'itération n-1. Sinon le bit est égal à 1.

De préférence, le bit est calculé avant le calcul de l'ordre de commande.

Le module de calcul 2 peut comporter un sous-module de calcul CALC1 2A compris dans le calculateur A et un sous-module de calcul CALC2 2B compris dans le calculateur B.

Le sous-module de calcul 2A du calculateur A est configuré pour calculer un premier bit. Le premier bit est égal à 0 si l'ordre de commande *la(n)* calculé par le calculateur A à l'itération n est égal à l'ordre de commande *la(n - 1)* calculé à l'itération n-1, sinon le premier bit est égal à 1. Le sous-module de calcul 2B du calculateur B est configuré pour calculer un deuxième bit. Le deuxième bit est égal à 0 si l'ordre de commande *Ib(n)* calculé par le calculateur B à l'itération n est égal à l'ordre de commande *Ib(n - 1)* calculé à l'itération n-1, sinon le deuxième bit est égal à 1.

Le module d'échange 3 est configuré pour que chacun des calculateurs A, B s'échange le bit calculé.

Le module d'échange 3 peut comprendre un sous-module de transmission SH1 3A compris dans le calculateur A et un sous-module de transmission SH2 3B compris dans le calculateur B.

Le sous-module de transmission 3A du calculateur A est configuré pour transmettre au calculateur B le premier bit calculé par le sous-module de calcul 2A.

Le sous-module de transmission 3B du calculateur B est configuré pour transmettre au calculateur A le deuxième bit calculé par le sous-module de calcul 2B.

Le premier bit correspond à un bit propre pour le calculateur A et à un bit opposé pour le calculateur B. Le deuxième bit correspond à un bit opposé pour le calculateur A et à un bit propre pour le calculateur B.

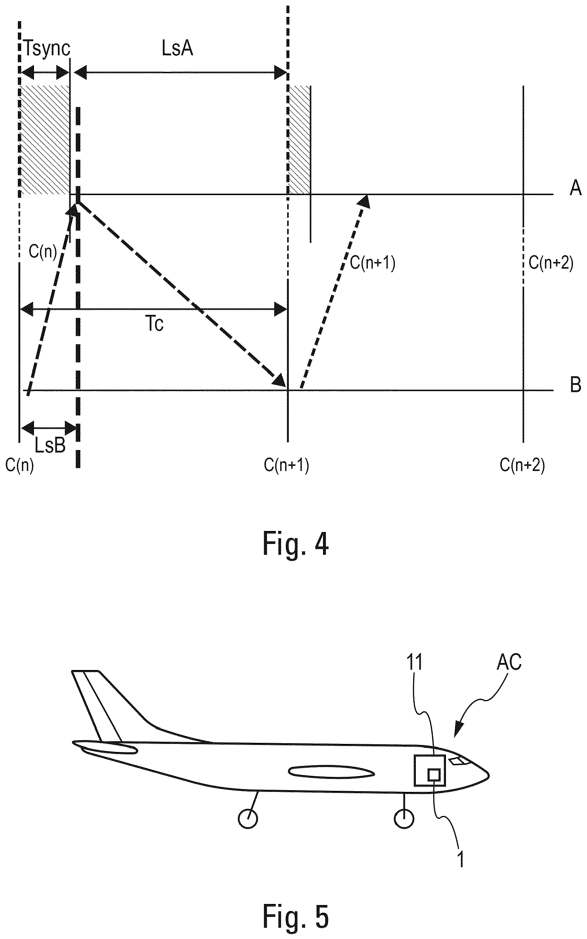

Les horloges présentant un période d'échantillonnage *Tc* de chacun des calculateurs A, B peuvent avoir entre elles un temps de décalage maximal *Tsync.* La figure 4 montre une séquence d'horloge C(n), C(n+1), C(n+2) des deux calculateurs A et B. L'horloge du calculateur A est en retard de *Tsync* par rapport à celle du calculateur B à l'itération n. Ce retard diminue à l'itération n+1 et disparaît à l'itération n+2. *Ls*1 représente le temps de latence minimale pour la transmission d'un bit d'un calculateur A, B à l'autre calculateur B, A. *Ls*2 représente le temps de latence maximale pour la transmission d'un bit d'un calculateur A, B à l'autre calculateur B, A. Afin qu'un bit calculé par un calculateur A à une itération n puisse soit disponible pour l'autre calculateur B, A à une itération n+1 exactement, le temps de latence de transmission *Ls*1 doit être supérieur au temps de décalage maximal *Tsync (Ls*1 > *Tsync)* et inférieur à la différence de la période d'échantillonnage *Tc* et du temps de décalage maximal *Tsync (Ls*2 < *Tc - 2Tsync).*

Par ailleurs, il est préférable de choisir une période d'échantillonnage Tc qui vérifie la relation suivante :

$$\frac{Ts-Ls}{Tc+2T_{sync}} > 3$$

, dans laquelle *Ts* correspond à une période de transmission de la donnée à synchroniser qui est acquise par les deux calculateurs A, B. $L_s$ correspond au temps de latence dû au transport de cette donnée vers chacun des calculateurs A, B.

Le module de détermination de paire signal 4 est configuré pour que chacun des calculateurs A, B détermine une paire de bits, appelée « paire signal de bits ». La paire signal de bits comprend le bit calculé par chacun des calculateurs A, B.

Le module de détermination de paire signal 4 peut comprendre un sous-module de détermination DET11 4A et un sous-module de détermination DET12 4B.

Le sous-module de détermination 4A du calculateur A est configuré pour déterminer une première paire signal de bits $Sa(n) = \begin{Bmatrix} sa0 \\ sa1 \end{Bmatrix}$ dans laquelle *sa*0 est un bit propre égal au premier bit calculé à l'itération n-1 par le sous-module de calcul 2A et *sa*1 est un bit opposé égal au deuxième bit calculé à l'itération n-1 par le sous-module de calcul 2B.

Le sous-module de détermination 4B du calculateur B est configuré pour déterminer une deuxième paire signal de bits $Sb(n) = \begin{Bmatrix} sb0 \\ sb1 \end{Bmatrix}$ dans laquelle *sb0* est un bit propre égal au deuxième bit calculé à l'itération n-1 par le sous-module de calcul 2B et *sb1* est un bit opposé égal au premier bit calculé à l'itération n-1 par le sous-module de calcul 2A.

Le module de détermination de paire produit 5 configuré pour que chacun des calculateurs A, B détermine une paire de bits, appelée « paire produit de bits ». La paire produit de bits indique quel bit égal à 1 de la paire signal de bits déterminée pour l'un des calculateurs A, B à l'itération n est égal au bit de la paire signal de bits déterminée pour l'autre des calculateurs A, B à l'itération n-1.

Le module de détermination de paire produit 5 peut comprendre un sous-module de détermination DET21 5A et un sous-module de détermination DET22 5B.

Le sous-module de détermination 5A du calculateur A est configuré pour déterminer une première paire produit de bits $Pa(n) = \begin{Bmatrix} pa0 \\ pa1 \end{Bmatrix}$ dans laquelle *pa*0 est un bit propre et *pa*1 est un bit opposé.

*Pa*(*n*) est déterminée de la manière suivante.

$$Pa(n) = \begin{Bmatrix} 1 \\ 1 \end{Bmatrix} \text{ si } \left( Ra(n-1) = \begin{Bmatrix} 1 \\ 1 \end{Bmatrix} \text{ ou } Ra(n-1) = \begin{Bmatrix} 0 \\ 0 \end{Bmatrix} \right) \text{ et } Sa(n) = \begin{Bmatrix} 1 \\ 1 \end{Bmatrix}.$$

$$Pa(n) = \begin{Bmatrix} 1 \\ 0 \end{Bmatrix} \text{ si } \left( Ra(n-1) = \begin{Bmatrix} 0 \\ 1 \end{Bmatrix} \text{ et } Sa(n) = \begin{Bmatrix} 1 \\ 1 \end{Bmatrix} \right) \text{ ou } (Ra(n-1) = \begin{Bmatrix} 0 \text{ ou } 1 \\ 1 \end{Bmatrix} \text{ et } Sa(n) = \begin{Bmatrix} 1 \\ 0 \end{Bmatrix}).$$

$$Pa(n) = \begin{Bmatrix} 0 \\ 1 \end{Bmatrix} \text{ si } \left( Ra(n-1) = \begin{Bmatrix} 1 \\ 0 \end{Bmatrix} \text{ et } Sa(n) = \begin{Bmatrix} 1 \\ 1 \end{Bmatrix} \right) \text{ ou } (Ra(n-1) = \begin{Bmatrix} 1 \\ 1 \text{ ou } 0 \end{Bmatrix} \text{ et } Sa(n) = \begin{Bmatrix} 0 \\ 1 \end{Bmatrix}).$$

$$Pa(n) = \begin{Bmatrix} 0 \\ 0 \end{Bmatrix}$$

dans les autres cas.

*Ra*(*n* - 1) correspond à une paire de bits, appelée « paire reste de bits » déterminée à l'itération n-1. La détermination de *Ra(n)* est expliquée ci-après dans la description.

Le sous-module de détermination 5B du calculateur B est configuré pour déterminer une deuxième paire produit de bits $Pb(n) = \begin{Bmatrix} pb0 \\ pb1 \end{Bmatrix}$ dans laquelle *pb0* est un bit propre et *pb*1 est un bit opposé.

*Pb(n)* est déterminée de la manière suivante.

$$Pb(n) = \begin{Bmatrix} 1 \\ 1 \end{Bmatrix} \text{ si } \left( Rb(n-1) = \begin{Bmatrix} 1 \\ 1 \end{Bmatrix} \text{ ou } Rb(n-1) = \begin{Bmatrix} 0 \\ 0 \end{Bmatrix} \right) \text{ et } Sb(n) = \begin{Bmatrix} 1 \\ 1 \end{Bmatrix}.$$

$$Pb(n) = \begin{Bmatrix} 1 \\ 0 \end{Bmatrix} \text{ si } \left( Rb(n-1) = \begin{Bmatrix} 0 \\ 1 \end{Bmatrix} \text{ et } Sb(n) = \begin{Bmatrix} 1 \\ 1 \end{Bmatrix} \right) \text{ ou } \left( Rb(n-1) = \begin{Bmatrix} 0 \text{ ou } 1 \\ 1 \end{Bmatrix} \text{ et } Sb(n) = \begin{Bmatrix} 1 \\ 0 \end{Bmatrix} \right).$$

$$Pb(n) = \begin{Bmatrix} 0 \\ 1 \end{Bmatrix} \text{ si } \left( Rb(n-1) = \begin{Bmatrix} 1 \\ 0 \end{Bmatrix} \text{ et } Sb(n) = \begin{Bmatrix} 1 \\ 1 \end{Bmatrix} \right) \text{ ou } \left( Rb(n-1) = \begin{Bmatrix} 1 \\ 1 \text{ ou } 0 \end{Bmatrix} \text{ et } Sb(n) = \begin{Bmatrix} 0 \\ 1 \end{Bmatrix} \right).$$

$$Pb(n) = \begin{Bmatrix} 0 \\ 0 \end{Bmatrix}$$

dans les autres cas.

$Rb(n-1)$ correspond à une paire reste de bits déterminée à l'itération n-1. La détermination de $Rb(n)$ est expliquée ci-après dans la description.

Le module de détermination de paire reste 6 est configuré pour que chacun des calculateurs A, B détermine une paire de bits, appelée « paire reste de bits ». La paire reste de bits indique quel bit égal à 1 de la paire signal de bits déterminée pour l'un des calculateurs A, B à l'itération n est différent du bit de la paire signal de bits déterminée pour l'autre des calculateurs A, B à l'itération n-1.

Le module de détermination de paire reste 6 peut comprendre un sous-module de détermination DET31 6A et un sous-module de détermination DET32 6B.

Le sous-module de détermination 6A du calculateur A est configuré pour déterminer une première paire reste de bits $Ra(n) = \begin{Bmatrix} ra0 \\ ra1 \end{Bmatrix}$ dans laquelle $ra0$ est un bit propre, $ra1$ est un bit opposé.

La première paire reste de bits est déterminée selon la relation suivante : $Ra(n) = Sa(n)$ XOR $Pa(n)$.

Le sous-module de détermination 6B du calculateur B est configuré pour déterminer une deuxième paire reste de bits $Rb(n) = \begin{Bmatrix} rb0 \\ rb1 \end{Bmatrix}$ dans laquelle $rb0$ est un bit propre, $rb1$ est un bit opposé.

La deuxième paire reste de bits est déterminée selon la relation suivante : $Rb(n) = Sb(n)$ XOR $Pb(n)$.

Le module de détermination de signal synchronisé 7 configuré pour que chacun des calculateurs A, B détermine un signal synchronisé à partir de la paire produit de bits et de la paire reste de bits.

Le module de détermination de signal synchronisé 7 comprend un sous-module de détermination DET41 7A et un sous-module de détermination DET42 7B.

Le sous-module de détermination 7A du calculateur A est configuré pour déterminer un premier signal synchronisé $Oa(n)$.

Ce premier signal synchronisé $Oa(n)$ est déterminé de la manière suivante.

Si $Pa(n) = \begin{Bmatrix} 0 \\ 0 \end{Bmatrix}$, le premier signal synchronisé $Oa(n)$ est égal au signal synchronisé $Oa(n-1)$ à l'itération n-1.

Si $Pa(n) \neq \begin{Bmatrix} 0 \\ 0 \end{Bmatrix}$ et si $ra0 = 0$, le premier signal synchronisé $Oa(n)$ est égal à l'ordre de commande $Ia(n-1)$ calculé par le calculateur A à l'itération n-1.

Si $Pa(n) \neq \begin{Bmatrix} 0 \\ 0 \end{Bmatrix}$ et si $ra0 = 1$, le premier signal synchronisé $Oa(n)$ est égal à l'ordre de commande $Ia(n-2)$ calculé par le calculateur A à l'itération n-2.

Le sous-module de détermination 7B du calculateur B est configuré pour déterminer un deuxième signal synchronisé $Ob(n)$.

Ce deuxième signal synchronisé $Ob(n)$ est déterminé de la manière suivante.

Si $Pb(n) = \begin{Bmatrix} 0 \\ 0 \end{Bmatrix}$, le deuxième signal synchronisé $Ob(n)$ est égal au deuxième signal synchronisé $Ob(n-1)$ à l'itération n-1.

Si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n - 1)* calculé par le calculateur B à l'itération n-1.

Si $Pb(n) \neq \begin{Bmatrix} 0 \\ 0 \end{Bmatrix}$ et si *rb0* = 1, le deuxième signal synchronisé *Ob (n)* est égal à l'ordre de commande *Ib(n - 2)* calculé par le calculateur B à l'itération n-2.

Par ailleurs, on considère qu'à la première itération n=N les paires de bits suivantes sont fixées à l'itération N-1 comme suit : *Ra(N - 1) = Sa(N - 1) =*
$$Rb(N - 1) = Sb(N - 1) = \begin{Bmatrix} 0 \\ 0 \end{Bmatrix}.$$

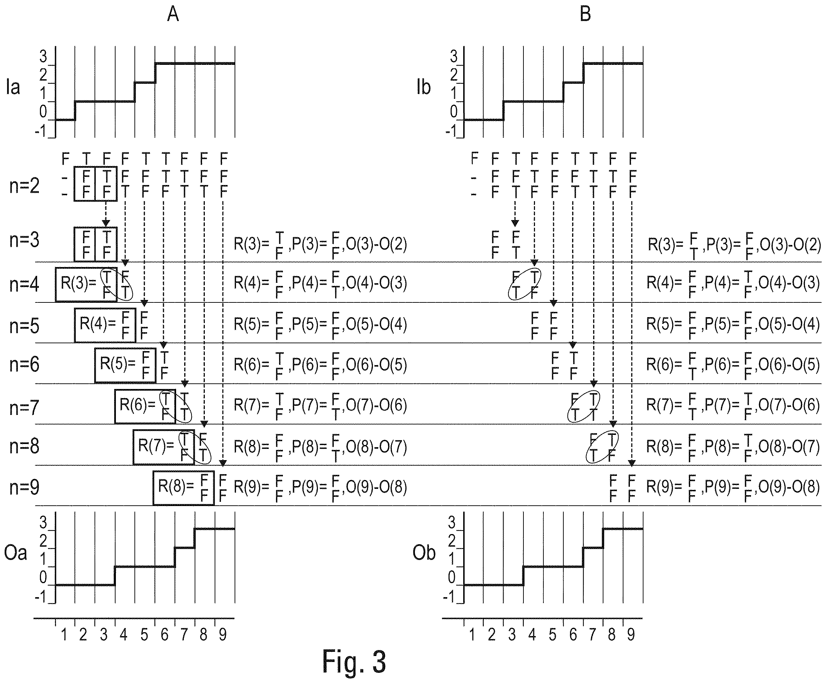

La figure 3 illustre un exemple de mise en oeuvre du système 1.

La colonne de droite concerne le calculateur A et la colonne de gauche concerne le calculateur B. La première ligne montre des graphes représentant un exemple d'ordres de commande *Ia, Ib* calculés respectivement par le calculateur A et le calculateur B. On remarque que l'ordre de commande *Ib* est en retard d'une itération par rapport à l'ordre de commande *Ia.*

La dernière ligne montre des graphes représentant les signaux synchronisés Oa, Ob déterminés par le système 1. On remarque que ces signaux *Oa* et *Ob* sont synchronisés.

La détermination des différentes paires de bits est représentée entre les deux lignes de graphes.

La lettre F (F pour « false » en anglais) signifie « faux » et correspond à un bit égal à 0. La lettre T (T pour « true » en anglais) signifie « vrai » et correspond à un bit égal à 1. Pour ne pas alourdir la figure, les accolades n'ont pas été mises.

À l'itération n=1 (non représentée), aucune synchronisation n'est réalisée. Donc, *Oa*(1) = *Ia*(1) et Ob(1) = *Ib*(1).

À l'itération n=2 : $Ra(2) = Sa(2) = Rb(2) = Sb(2) = \begin{Bmatrix} 0 \\ 0 \end{Bmatrix}$. Aucune synchronisation n'est donc réalisée.

Donc, *Oa*(2) = *Oa*(1) et Ob(2) = *Ob(1).*

À l'itération n=3 :

Pour le calculateur A, *Ia*(2) est différent de *Ia*(1), mais *Ib*(2) est égal à *Ib*(1). Ainsi $Sa(3) = \begin{Bmatrix} 1 \\ 0 \end{Bmatrix}$ et $Ra(2) = \begin{Bmatrix} 0 \\ 0 \end{Bmatrix}$. Par conséquent, $Pa(3) = \begin{Bmatrix} 0 \\ 0 \end{Bmatrix}$.

Donc, *Oa*(3) = *Oa*(2).

Pour le calculateur B, *Ib*(2) est égal à *Ib*(1)*,* mais *Ia*(2) est différent de *Ia*(1). Ainsi, $Sb(3) = \begin{Bmatrix} 0 \\ 1 \end{Bmatrix}$ et $Rb(2) = \begin{Bmatrix} 0 \\ 0 \end{Bmatrix}$. Par conséquent, $Pb(3) = \begin{Bmatrix} 0 \\ 0 \end{Bmatrix}$.

Donc, Ob(3) = *Ob*(2).

À l'itération n=4 :

Pour le calculateur A, *Ia*(3) est égal à *Ia*(2) et Ib(3) est différent de Ib(2). Ainsi $Sa(4) = \begin{Bmatrix} 0 \\ 1 \end{Bmatrix}$ et $Ra(3) = \begin{Bmatrix} 1 \\ 0 \end{Bmatrix}$. Par conséquent, $Pa(4) = \begin{Bmatrix} 0 \\ 1 \end{Bmatrix}$.

Donc, *Oa*(4) = *Ia*(3).

Pour le calculateur B, Ib(3) est différent de *Ib*(2) et Ia(3) est égal à *Ia*(2). Ainsi, $Sb(4) = \begin{Bmatrix} 1 \\ 0 \end{Bmatrix}$ et

$$Rb(3) = \begin{Bmatrix} 0 \\ 1 \end{Bmatrix}$$ . Par conséquent, $$Pb(4) = \begin{Bmatrix} 1 \\ 0 \end{Bmatrix}$$ .

Donc, Ob(4) = *Ib*(3).

À l'itération n=5 :

Pour le calculateur A, *Ia*(4) est égale à *Ia*(3) et Ib(4) est égal à Ib(3). Ainsi $$Sa(5) = \begin{Bmatrix} 0 \\ 0 \end{Bmatrix}$$ et $$Ra(4) = \begin{Bmatrix} 0 \\ 0 \end{Bmatrix}$$ . Par conséquent, $$Pa(5) = \begin{Bmatrix} 0 \\ 0 \end{Bmatrix}$$ .

Donc, *Oa*(5) = *Oa*(4).

Pour le calculateur B, Ib(4) est égale à *Ib*(3) et *Ia*(4) est égal à *Ia*(3). Ainsi, $$Sb(5) = \begin{Bmatrix} 0 \\ 0 \end{Bmatrix}$$ et $$Rb(4) = \begin{Bmatrix} 0 \\ 0 \end{Bmatrix}$$ . Par conséquent, $$Pb(5) = \begin{Bmatrix} 0 \\ 0 \end{Bmatrix}$$ .

Donc, Ob(5) = *Ob*(4).

À l'itération n=6 :

Pour le calculateur A, *Ia*(5) est différent de *Ia*(4), mais Ib(5) est égal à *Ib*(4). Ainsi $$Sa(6) = \begin{Bmatrix} 1 \\ 0 \end{Bmatrix}$$ et $$Ra(5) = \begin{Bmatrix} 0 \\ 0 \end{Bmatrix}$$ . Par conséquent, $$Pa(6) = \begin{Bmatrix} 0 \\ 0 \end{Bmatrix}$$ .

Donc, *Oa*(6) = *Oa*(5).

Pour le calculateur B, Ib(5) est égal à Ib(4), mais *Ia*(5) est différent de *Ia*(4). Ainsi, $$Sb(6) = \begin{Bmatrix} 0 \\ 1 \end{Bmatrix}$$ et $$Rb(5) = \begin{Bmatrix} 0 \\ 0 \end{Bmatrix}$$ . Par conséquent, $$Pb(6) = \begin{Bmatrix} 0 \\ 0 \end{Bmatrix}$$ .

Donc, Ob(6) = *Ob*(5).

À l'itération n=7 :

Pour le calculateur A, *Ia*(6) est différent de *Ia*(5) et Ib(6) est différent de Ib(5). Ainsi $$Sa(7) = \begin{Bmatrix} 1 \\ 1 \end{Bmatrix}$$ et $$Ra(6) = \begin{Bmatrix} 1 \\ 0 \end{Bmatrix}$$ . Par conséquent, $$Pa(7) = \begin{Bmatrix} 0 \\ 1 \end{Bmatrix}$$ .

Donc, *Oa*(7) = *Ia*(5).

Pour le calculateur B, Ib(6) est différent de Ib(5) et *Ia*(6) est différent de Ib(5). Ainsi, $$Sb(7) = \begin{Bmatrix} 1 \\ 1 \end{Bmatrix}$$ et $$Rb(6) = \begin{Bmatrix} 0 \\ 1 \end{Bmatrix}$$ . Par conséquent, $$Pb(7) = \begin{Bmatrix} 1 \\ 0 \end{Bmatrix}$$ .

Donc, Ob(7) = *Ib*(6).

À l'itération n=8 :

Pour le calculateur A, *Ia*(7) est égal à *Ia*(6), mais Ib(7) est différent de Ib(6). Ainsi $$Sa(8) = \begin{Bmatrix} 0 \\ 1 \end{Bmatrix}$$ et

$$Ra(7) = \begin{Bmatrix} 1 \\ 0 \end{Bmatrix}$$ . Par conséquent, $$Pa(8) = \begin{Bmatrix} 0 \\ 1 \end{Bmatrix}$$ .

Donc, $Oa(8) = Ia(7)$.

Pour le calculateur B, Ib(7) est différent de Ib(6) mais $Ia(7)$ est égal à $Ia(6)$. Ainsi, $$Sb(8) = \begin{Bmatrix} 1 \\ 0 \end{Bmatrix}$$ et

$$Rb(7) = \begin{Bmatrix} 0 \\ 1 \end{Bmatrix}$$ . Par conséquent, $$Pb(8) = \begin{Bmatrix} 1 \\ 0 \end{Bmatrix}$$ .

Donc, Ob(8) = Ib(7).

À l'itération n=9,

Pour le calculateur A, $Ia(8)$ est égal à $Ia(7)$ et Ib(8) est égal à Ib(7). Ainsi $$Sa(9) = \begin{Bmatrix} 0 \\ 0 \end{Bmatrix}$$ et $$Ra(8) = \begin{Bmatrix} 0 \\ 0 \end{Bmatrix}$$ . Par conséquent, $$Pa(9) = \begin{Bmatrix} 0 \\ 0 \end{Bmatrix}$$ .

Donc, $Oa(9) = Oa(8)$.

Pour le calculateur B, Ib(8) est égal à Ib(7) et $Ia(8)$ est égal à $Ia(7)$. Ainsi, $$Sb(9) = \begin{Bmatrix} 0 \\ 0 \end{Bmatrix}$$ et $$Rb(8) = \begin{Bmatrix} 0 \\ 0 \end{Bmatrix}$$ . Par conséquent, $$Pb(9) = \begin{Bmatrix} 0 \\ 0 \end{Bmatrix}$$ .

Donc, Ob(9) = Ob(8).

L'invention concerne également un procédé de synchronisation d'un calculateur A et d'un calculateur B (figure 2).

Ledit procédé comprend un ensemble d'étapes mis en oeuvre de manière itérative.

L'ensemble d'étapes mis en oeuvre à chaque itération n comporte :

- une étape E1 de calcul, mise en oeuvre par le module de calcul 2, consistant à ce que chacun des calculateurs A, B calcule un bit, le bit étant égal à 0 si l'ordre de commande calculé par chacun des calculateurs A, B à l'itération n est égal à l'ordre de commande calculé à l'itération n-1, sinon le bit étant égal à 1 ;
- une étape E2 d'échange, mise en oeuvre par le module d'échange 3, consistant à ce que chacun des calculateurs A, B s'échange le bit calculé ;
- une étape E3 de détermination d'une paire signal, mise en oeuvre par le module de détermination de paire signal 4, consistant à ce que chacun des calculateurs A, B détermine une paire signal de bits, la paire signal de bits comprenant le bit calculé par chacun des calculateurs A, B ;
- une étape E4 de détermination de paire produit, mise en oeuvre par le module de détermination de paire produit 5, consistant à ce que chacun des calculateurs A, B détermine une paire produit de bits, la paire produit de bits indiquant quel bit égal à 1 de la paire signal de bits déterminée pour l'un des calculateurs A, B à l'itération n est égal au bit de la paire signal de bits déterminée pour l'autre des calculateurs A, B à l'itération n-1 ;
- une étape E5 de détermination de paire reste, mise en oeuvre par le module de détermination de paire reste 6, consistant à ce que chacun des calculateurs A, B détermine une paire reste de bits, la paire reste de bits indiquant quel bit égal à 1 de la paire signal de bits déterminée pour l'un des calculateurs A, B à l'itération n est différent du bit de la paire signal de bits déterminée pour l'autre des calculateurs A, B à l'itération n-1 ;
- une étape E6 de détermination de signal synchronisé, mise en oeuvre par le module de détermination de signal synchronisé 7, consistant à ce que chacun des calculateurs A, B détermine un signal synchronisé à partir de la paire produit de bits et de la paire reste de bits.

L'étape E1 de calcul peut comprendre les sous-étapes suivantes :

- une sous-étape E1A de calcul, mise en oeuvre par le sous-module de calcul 2A du calculateur A, consistant à calculer un premier bit, le premier bit étant égal à 0 si l'ordre de commande $Ia(n)$ calculé par le premier calculateur A à l'itération n est égal à l'ordre de commande $Ia(n - 1)$ calculé à l'itération n-1 par le calculateur A, sinon le premier bit étant égal à 1 ;
- une sous-étape E1B de calcul, mise en oeuvre par le sous-module de calcul 2B du calculateur B, consistant à calculer un deuxième bit, le deuxième bit étant égal à 0 si l'ordre de commande *Ib(n)* calculé par le calculateur B à l'itération n est égal à l'ordre de commande *Ib(n* - 1) calculé à l'itération n-1 par le calculateur B, sinon le deuxième bit étant égal à 1.

L'étape E2 d'échange peut comprendre les sous-étapes suivantes :

- une sous-étape E2A de transmission, mise en oeuvre par le sous-module de transmission 3A du calculateur A, consistant à transmettre au calculateur B le premier bit calculé par le calculateur A ;
- une sous-étape E2B de transmission, mise en oeuvre par le sous-module de transmission 3B du calculateur B, consistant à transmettre au calculateur A le deuxième bit calculé par le calculateur B.

L'étape E3 de détermination de paire signal peut comprendre les sous-étapes suivantes :

- une sous-étape (E3A) de détermination, mise en oeuvre par le sous-module de détermination 4A du calculateur A, consistant à déterminer une première paire signal de bits $Sa(n) = \begin{Bmatrix} sa0 \\ sa1 \end{Bmatrix}$ dans laquelle *sa0* est un bit propre égal au premier bit calculé à l'itération n-1 et *sa*1 est un bit opposé égal au deuxième bit calculé à l'itération n-1 ;
- une sous-étape E3B de détermination, mise en oeuvre par le sous-module de détermination 4B du calculateur B, consistant à déterminer une deuxième paire signal de bits $Sb(n) = \begin{Bmatrix} sb0 \\ sb1 \end{Bmatrix}$ dans laquelle *sb0* est un bit propre égal au deuxième bit calculé à l'itération n-1 et *sb1* est un bit opposé égal au premier bit calculé à l'itération n-1.

L'étape E4 de détermination de paire produit peut comprendre les sous-étapes suivantes :

- une sous-étape E4A de détermination, mise en oeuvre par le sous-module de détermination 5A du calculateur A, consistant à déterminer une première paire produit de bits $Pa(n) = \begin{Bmatrix} pa0 \\ pa1 \end{Bmatrix}$ dans laquelle *pa*0 est un bit propre et *pa*1 est un bit opposé,

  • $Pa(n) = \begin{Bmatrix} 1 \\ 1 \end{Bmatrix}$ si ( $Ra(n-1) = \begin{Bmatrix} 1 \\ 1 \end{Bmatrix}$ ou $Ra(n-1) = \begin{Bmatrix} 0 \\ 0 \end{Bmatrix}$ ) et $Sa(n) = \begin{Bmatrix} 1 \\ 1 \end{Bmatrix}$, *Ra(n* - 1) correspondant à une paire reste de bits déterminée à l'itération n-1,

  • $Pa(n) = \begin{Bmatrix} 1 \\ 0 \end{Bmatrix}$ si ( $Ra(n-1) = \begin{Bmatrix} 0 \\ 1 \end{Bmatrix}$ et $Sa(n) = \begin{Bmatrix} 1 \\ 1 \end{Bmatrix}$ ) ou (*Ra(n* - 1) = $\begin{Bmatrix} 0 \text{ ou } 1 \\ 1 \end{Bmatrix}$ et $Sa(n) = \begin{Bmatrix} 1 \\ 0 \end{Bmatrix}$ ),

  • $Pa(n) = \begin{Bmatrix} 0 \\ 1 \end{Bmatrix}$ si ( $Ra(n-1) = \begin{Bmatrix} 1 \\ 0 \end{Bmatrix}$ et $Sa(n) = \begin{Bmatrix} 1 \\ 1 \end{Bmatrix}$ ) ou (*Ra(n* - 1) = $\begin{Bmatrix} 1 \\ 1 \text{ ou } 0 \end{Bmatrix}$ et $Sa(n) = \begin{Bmatrix} 0 \\ 1 \end{Bmatrix}$ ),

  • sinon $Pa(n) = \begin{Bmatrix} 0 \\ 0 \end{Bmatrix}$ ;

- une sous-étape E4B de détermination, mise en oeuvre par le sous-module de détermination 5B du calculateur B, consistant à déterminer une deuxième paire produit de bits $Pb(n) = \begin{Bmatrix} pb0 \\ pb1 \end{Bmatrix}$ dans laquelle *pb0* est un bit propre et *pb*1 est un bit opposé,

  • $Pb(n) = \begin{Bmatrix} 1 \\ 1 \end{Bmatrix}$ si ( $Rb(n-1) = \begin{Bmatrix} 1 \\ 1 \end{Bmatrix}$ ou $Rb(n-1) = \begin{Bmatrix} 0 \\ 0 \end{Bmatrix}$ ) et $Sb(n) = \begin{Bmatrix} 1 \\ 1 \end{Bmatrix}$, *Rb(n* - 1) correspondant à une paire reste de bits déterminée à l'itération n-1,

- $Pb(n) = \begin{Bmatrix} 1 \\ 0 \end{Bmatrix}$ si $\left( Rb(n-1) = \begin{Bmatrix} 0 \\ 1 \end{Bmatrix} \text{ et } Sb(n) = \begin{Bmatrix} 1 \\ 1 \end{Bmatrix} \right)$ ou $\left( Rb(n - 1) = \begin{Bmatrix} 0 \text{ ou } 1 \\ 1 \end{Bmatrix} \text{ et } Sb(n) = \begin{Bmatrix} 1 \\ 0 \end{Bmatrix} \right)$,

- $Pb(n) = \begin{Bmatrix} 0 \\ 1 \end{Bmatrix}$ si $\left( Rb(n-1) = \begin{Bmatrix} 1 \\ 0 \end{Bmatrix} \text{ et } Sb(n) = \begin{Bmatrix} 1 \\ 1 \end{Bmatrix} \right)$ ou $\left( Rb(n - 1) = \begin{Bmatrix} 1 \\ 1 \text{ ou } 0 \end{Bmatrix} \text{ et } Sb(n) = \begin{Bmatrix} 0 \\ 1 \end{Bmatrix} \right)$,

- sinon $Pb(n) = \begin{Bmatrix} 0 \\ 0 \end{Bmatrix}$.

L'étape E5 de détermination de paire reste peut comprendre les sous-étapes suivantes :

- une sous-étape E5A de détermination, mise en oeuvre par le sous-module de détermination 6A du calculateur A, consistant à déterminer une première paire reste de bits $Ra(n) = \begin{Bmatrix} ra0 \\ ra1 \end{Bmatrix}$ dans laquelle *ra*0 est un bit propre, *ra1* est un bit opposé et *Ra(n) = Sa(n)* XOR *Pa(n) ;*

- une sous-étape E5B de détermination, mise en oeuvre par le sous-module de détermination 6B du calculateur B, consistant à déterminer une deuxième paire reste de bits $Rb(n) = \begin{Bmatrix} rb0 \\ rb1 \end{Bmatrix}$ dans laquelle *rb0* est un bit propre, *rb1* est un bit opposé et *Rb(n) = Sb(n)* XOR *Pb(n).*

L'étape E6 de détermination de signal synchronisé comprend les sous-étapes suivantes :

- une sous-étape E6A de détermination, mise en oeuvre par le sous-module de détermination 7A du calculateur A, consistant à déterminer un premier signal synchronisé *Oa(n),*

  - si $Pa(n) = \begin{Bmatrix} 0 \\ 0 \end{Bmatrix}$, le premier signal synchronisé *Oa*(*n*) est égal au premier signal synchronisé *Oa*(*n* - 1) à l'itération n-1,

  - si $Pa(n) \neq \begin{Bmatrix} 0 \\ 0 \end{Bmatrix}$ et si *ra*0 = 0, le premier signal synchronisé *Oa(n)* est égal à l'ordre de commande *Ia*(*n* - 1) calculé par le calculateur A à l'itération n-1,

  - si $Pa(n) \neq \begin{Bmatrix} 0 \\ 0 \end{Bmatrix}$ et si *ra*0 = 1, le premier signal synchronisé *Oa(n)* est égal à l'ordre de commande *Ia*(*n* - 2) calculé par le calculateur A à l'itération n-2 ;

- une sous-étape E6B de détermination, mise en oeuvre par le sous-module de détermination 7B du calculateur B, consistant à déterminer un deuxième signal synchronisé *Ob(n),*

  - si $Pb(n) = \begin{Bmatrix} 0 \\ 0 \end{Bmatrix}$, le deuxième signal synchronisé *Ob(n)* est égal au deuxième signal synchronisé *Ob(n* - 1) à l'itération n-1,

  - si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n* - 1) calculé par le calculateur B à l'itération n-1,

  - si $Pb(n) \neq \begin{Bmatrix} 0 \\ 0 \end{Bmatrix}$ et si *rb0* = 1, le deuxième signal synchronisé *Ob(n)* est égal à l'ordre de commande *Ib(n* - 2) calculé par le calculateur B à l'itération n-2.

**Revendications**

1. Procédé de synchronisation d'un premier calculateur (A) et d'un deuxième calculateur (B), chacun des calculateurs (A, B) étant configuré pour calculer des ordres de commande destinés à commander un actionneur de gouverne d'un aéronef (AC) selon une même loi de pilotage, chacun des calculateurs (A, B) comprenant une horloge synchronisée l'une avec l'autre, le premier calculateur (A) présentant une avance ou un retard par rapport au deuxième calculateur (B), l'avance ou le retard étant inconnu et temporellement borné ;
caractérisé en ce qu'il comprend un ensemble d'étapes mis en oeuvre de manière itérative, l'ensemble d'étapes mis en oeuvre à chaque itération n comportant :

- une étape (E1) de calcul, mise en oeuvre par un module de calcul (2), consistant à ce que chacun des calculateurs (A, B) calcule un bit, le bit étant égal à 0 si l'ordre de commande $Ia(n)$, $Ib(n)$ calculé par chacun des calculateurs (A, B) à l'itération n est égal à l'ordre de commande $Ia(n - 1)$, $Ib(n - 1)$ calculé à l'itération n-1, sinon le bit étant égal à 1 ;
- une étape (E2) d'échange, mise en oeuvre par un module d'échange (3), consistant à ce que chacun des calculateurs (A, B) s'échange le bit calculé ;
- une étape (E3) de détermination d'une paire signal, mise en oeuvre par un module de détermination de paire signal (4), consistant à ce que chacun des calculateurs (A, B) détermine une paire signal de bits

$$Sa(n) = \begin{Bmatrix} sa0 \\ sa1 \end{Bmatrix} \quad Sb(n) = \begin{Bmatrix} sb0 \\ sb1 \end{Bmatrix}$$

, la paire signal de bits $Sa(n)$, $Sb(n)$ comprenant le bit calculé par chacun des calculateurs (A, B) ;
- une étape (E4) de détermination de paire produit, mise en oeuvre par un module de détermination de paire produit (5), consistant à ce que chacun des calculateurs (A, B) détermine une paire produit de bits

$$Pa(n) = \begin{Bmatrix} pa0 \\ pa1 \end{Bmatrix} \quad Pb(n) = \begin{Bmatrix} pb0 \\ pb1 \end{Bmatrix}$$

, la paire produit de bits $Pa(n)$, $Pb(n)$ indiquant quel bit égal à 1 de la paire signal de bits $Sa(n)$, $Sb(n)$ déterminée pour l'un des calculateurs (A, B) à l'itération n est égal au bit de la paire signal de bits $Sa(n - 1)$, $Sb(n - 1)$ déterminée pour l'autre des calculateurs (A, B) à l'itération n-1 ;
- une étape (E5) de détermination de paire reste, mise en oeuvre par un module de détermination de paire reste (6), consistant à ce que chacun des calculateurs (A, B) détermine une paire reste de bits

$$Ra(n) = \begin{Bmatrix} ra0 \\ ra1 \end{Bmatrix} \quad Rb(n) = \begin{Bmatrix} rb0 \\ rb1 \end{Bmatrix}$$

, la paire reste de bits $Ra(n)$, $Rb(n)$ indiquant quel bit égal à 1 de la paire signal de bits $Sa(n)$, $Sb(n)$ déterminée pour l'un des calculateurs (A, B) à l'itération n est différent du bit de la paire signal de bits $Sa(n - 1)$, $Sb(n - 1)$ déterminée pour l'autre des calculateurs (A, B) à l'itération n-1 ;
- une étape (E6) de détermination de signal synchronisé, mise en oeuvre par un module de détermination de signal synchronisé (7), consistant à ce que chacun des calculateurs (A, B) détermine un signal synchronisé à partir de la paire produit de bits $Pa(n)$, $Pb(n)$ et de la paire reste de bits $Ra(n)$, $Rb(n)$ ;

l'étape (E6) de détermination de signal synchronisé comprenant les sous-étapes suivantes :

- une sous-étape (E6A) de détermination, mise en oeuvre par un sous-module de détermination (7A) du module de détermination de signal synchronisé (7) compris dans le premier calculateur (A), consistant à déterminer un premier signal synchronisé $Oa(n)$,

- si $Pa(n) = \begin{Bmatrix} 0 \\ 0 \end{Bmatrix}$ , le premier signal synchronisé $Oa(n)$ est égal au premier signal synchronisé $Oa(n - 1)$ à l'itération n-1,

- si $Pa(n) \neq \begin{Bmatrix} 0 \\ 0 \end{Bmatrix}$ et si $ra0 = 0$, le premier signal synchronisé $Oa(n)$ est égal à l'ordre de commande $Ia(n - 1)$ calculé par le premier calculateur (A) à l'itération n-1,

- si $Pa(n) \neq \begin{Bmatrix} 0 \\ 0 \end{Bmatrix}$ et si $ra0 = 1$, le premier signal synchronisé $Oa(n)$ est égal à l'ordre de commande $Ia(n - 2)$ calculé par le premier calculateur (A) à l'itération n-2 ;

- une sous-étape (E6B) de détermination, mise en oeuvre par un sous-module de détermination (7B) du module de détermination de signal synchronisé (7) compris dans le deuxième calculateur (B), consistant à déterminer un deuxième signal synchronisé *Ob(n),*

• si $Pb(n) = \begin{Bmatrix} 0 \\ 0 \end{Bmatrix}$, le deuxième signal synchronisé *Ob(n)* est égal au deuxième signal synchronisé *Ob(n - 1)* à l'itération n-1,

• si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n - 1)* calculé par le deuxième calculateur (B) à l'itération n-1,

• si $Pb(n) \neq \begin{Bmatrix} 0 \\ 0 \end{Bmatrix}$ et si *rb0* = 1, le deuxième signal synchronisé *Ob(n)* est égal à l'ordre de commande *Ib(n - 2)* calculé par le deuxième calculateur (B) à l'itération n-2.

2. Procédé selon la revendication 1,
   **caractérisé en ce que** l'étape (E1) de calcul comprend les sous-étapes suivantes :

   - une première sous-étape (E1A) de calcul, mise en oeuvre par un premier sous-module de calcul (2A) compris dans le premier calculateur (A), consistant à calculer un premier bit, le premier bit étant égal à 0 si l'ordre de commande *Ia(n)* calculé par le premier calculateur (A) à l'itération n est égal à l'ordre de commande *Ia(n - 1)* calculé à l'itération n-1, sinon le premier bit étant égal à 1 ;
   - une deuxième sous-étape (E1B) de calcul, mise en oeuvre par un deuxième sous-module de calcul (2B) compris dans le deuxième calculateur (B), consistant à calculer un deuxième bit, le deuxième bit étant égal à 0 si l'ordre de commande *Ib(n)* calculé par le deuxième calculateur (B) à l'itération n est égal à l'ordre de commande *Ib(n - 1)* calculé à l'itération n-1, sinon le deuxième bit étant égal à 1.

3. Procédé selon la revendication 2, **caractérisé en ce que** l'étape (E2) d'échange comprend les sous-étapes suivantes :

   - une première sous-étape (E2A) de transmission, mise en oeuvre par un premier sous-module de transmission (3A) du premier calculateur (A), consistant à transmettre au deuxième calculateur (B) le premier bit ;
   - une deuxième sous-étape (E2B) de transmission, mise en oeuvre par un deuxième sous-module de transmission (3B) du deuxième calculateur (B), consistant à transmettre au premier calculateur (A) le deuxième bit.

4. Procédé selon l'une quelconque des revendications 1 à 3,
   **caractérisé en ce que** l'étape (E3) de détermination de paire signal comprend les sous-étapes suivantes :

   - une sous-étape (E3A) de détermination, mise en oeuvre par un sous-module de détermination (4A) du module de détermination de paire signal (4) compris dans le premier calculateur (A), consistant à déterminer la première paire signal de bits $Sa(n) = \begin{Bmatrix} sa0 \\ sa1 \end{Bmatrix}$ dans laquelle *sa*0 est un bit propre égal au premier bit calculé à l'itération n-1 et *sa*1 est un bit opposé égal au deuxième bit calculé à l'itération n-1 ;
   - une sous-étape (E3B) de détermination, mise en oeuvre par un sous-module de détermination (4B) du module de détermination de paire signal (4) compris dans le deuxième calculateur (B), consistant à déterminer la deuxième paire signal de bits $Sb(n) = \begin{Bmatrix} sb0 \\ sb1 \end{Bmatrix}$ dans laquelle *sb0* est un bit propre égal au deuxième bit calculé à l'itération n-1 et *sb1* est un bit opposé égal au premier bit calculé à l'itération n-1.

5. Procédé selon l'une quelconque des revendications 1 à 4,
   **caractérisé en ce que** l'étape (E4) de détermination de paire produit comprend les sous-étapes suivantes :

   - une sous-étape (E4A) de détermination, mise en oeuvre par un sous-module de détermination (5A) du module de détermination de paire produit (5) compris dans le premier calculateur (A), consistant à déterminer la première paire produit de bits $Pa(n) = \begin{Bmatrix} pa0 \\ pa1 \end{Bmatrix}$ dans laquelle *pa0* est un bit propre et *pa*1 est un bit opposé,

- $Pa(n) = \begin{Bmatrix} 1 \\ 1 \end{Bmatrix}$ si ( $Ra(n-1) = \begin{Bmatrix} 1 \\ 1 \end{Bmatrix}$ ou $Ra(n-1) = \begin{Bmatrix} 0 \\ 0 \end{Bmatrix}$ ) et $Sa(n) = \begin{Bmatrix} 1 \\ 1 \end{Bmatrix}$, $Ra(n$ - 1) correspondant à une paire reste de bits déterminée à l'itération n-1,

- $Pa(n) = \begin{Bmatrix} 1 \\ 0 \end{Bmatrix}$ si ( $Ra(n-1) = \begin{Bmatrix} 0 \\ 1 \end{Bmatrix}$ et $Sa(n) = \begin{Bmatrix} 1 \\ 1 \end{Bmatrix}$ ) ou (Ra(n - 1) = $\begin{Bmatrix} 0\ ou\ 1 \\ 1 \end{Bmatrix}$ et $Sa(n) = \begin{Bmatrix} 1 \\ 0 \end{Bmatrix}$),

- $Pa(n) = \begin{Bmatrix} 0 \\ 1 \end{Bmatrix}$ si ( $Ra(n-1) = \begin{Bmatrix} 1 \\ 0 \end{Bmatrix}$ et $Sa(n) = \begin{Bmatrix} 1 \\ 1 \end{Bmatrix}$ ) (Ra(n - 1) = $\begin{Bmatrix} 1 \\ 1\ ou\ 0 \end{Bmatrix}$ et $Sa(n) = \begin{Bmatrix} 0 \\ 1 \end{Bmatrix}$ ),

- sinon $Pa(n) = \begin{Bmatrix} 0 \\ 0 \end{Bmatrix}$ ;

- une sous-étape (E4B) de détermination, mise en œuvre par un sous-module de détermination (5B) du module de détermination de paire produit (5) compris dans le deuxième calculateur (B), consistant à déterminer la deuxième paire produit de bits $Pb(n) = \begin{Bmatrix} pb0 \\ pb1 \end{Bmatrix}$ dans laquelle $pb0$ est un bit propre et $pb1$ est un bit opposé,

- $Pb(n) = \begin{Bmatrix} 1 \\ 1 \end{Bmatrix}$ si ( $Rb(n-1) = \begin{Bmatrix} 1 \\ 1 \end{Bmatrix}$ ou $Rb(n-1) = \begin{Bmatrix} 0 \\ 0 \end{Bmatrix}$ ) et $Sb(n) = \begin{Bmatrix} 1 \\ 1 \end{Bmatrix}$, $Rb(n$ - 1) correspondant à une paire reste de bits déterminée à l'itération n-1,

- $Pb(n) = \begin{Bmatrix} 1 \\ 0 \end{Bmatrix}$ si ( $Rb(n-1) = \begin{Bmatrix} 0 \\ 1 \end{Bmatrix}$ $Sb(n) = \begin{Bmatrix} 1 \\ 1 \end{Bmatrix}$ ) ou (Rb(n - 1) = $\begin{Bmatrix} 0\ ou\ 1 \\ 1 \end{Bmatrix}$ et $Sb(n) = \begin{Bmatrix} 1 \\ 0 \end{Bmatrix}$ )

- $Pb(n) = \begin{Bmatrix} 0 \\ 1 \end{Bmatrix}$ si ( $Rb(n-1) = \begin{Bmatrix} 1 \\ 0 \end{Bmatrix}$ et $Sb(n) = \begin{Bmatrix} 1 \\ 1 \end{Bmatrix}$ ) ou (Rb(n - 1) = $\begin{Bmatrix} 1 \\ 1\ ou\ 0 \end{Bmatrix}$ et $Sb(n) = \begin{Bmatrix} 0 \\ 1 \end{Bmatrix}$ ),

- sinon $Pb(n) = \begin{Bmatrix} 0 \\ 0 \end{Bmatrix}$ .

**6.** Procédé selon l'une quelconque des revendications 1 à 5, **caractérisé en ce que** l'étape (E5) de détermination de paire reste comprend les sous-étapes suivantes :

- une sous-étape (E5A) de détermination, mise en oeuvre par un sous-module de détermination (6A) du module de détermination de paire reste (6) compris dans le premier calculateur (A), consistant à déterminer la première paire reste de bits $Ra(n)$ dans laquelle ra0 est un bit propre, ra1 est un bit opposé et

$$Ra(n) = Sa(n)\ \text{XOR}\ Pa(n) ;$$

- une sous-étape (E5B) de détermination, mise en oeuvre par un sous-module de détermination (6B) du module de détermination de paire reste (6) compris dans le deuxième calculateur (B), consistant à déterminer la deuxième paire reste de bits $Rb(n)$ dans laquelle $rb0$ est un bit propre, $rb1$ est un bit opposé et $Rb(n) = Sb(n)\ \text{XOR}\ Pb(n)$.

**7.** Ensemble comprenant un premier calculateur (A), un deuxième calculateur (B) et un système de synchronisation du premier calculateur (A) et du deuxième calculateur (B), chacun des calculateurs (A, B) étant configuré pour calculer des ordres de commande destinés à commander un actionneur de gouverne d'un aéronef (AC) selon une même loi de pilotage, chacun des calculateurs (A, B) comprenant une horloge synchronisée l'une avec l'autre, le premier calculateur (A) présentant une avance ou un retard par rapport au deuxième calculateur (B), l'avance ou le retard étant inconnu et temporellement borné ; **caractérisé en ce que** le système de synchronisation un ensemble de modules configurés pour une mise en oeuvre de manière itérative, l'ensemble de modules pour une mise en oeuvre à chaque itération n comportant :

- un module de calcul (2) configuré pour que chacun des calculateurs (A, B) calcule un bit, le bit étant égal à 0 si l'ordre de commande $Ia(n)$, $Ib(n)$ calculé par chacun des calculateurs (A, B) à l'itération n est égal à l'ordre de commande $Ia(n - 1)$, $Ib(n - 1)$ calculé à l'itération n-1, sinon le bit étant égal à 1 ;
- un module d'échange (3) configuré pour que chacun des calculateurs (A, B) s'échange le bit calculé ;
- un module de détermination de paire signal (4) configuré pour que chacun des calculateurs (A, B) détermine

$$Sa(n) = \begin{Bmatrix} sa0 \\ sa1 \end{Bmatrix}, \quad Sb(n) = \begin{Bmatrix} sb0 \\ sb1 \end{Bmatrix}$$

une paire signal de bits, la paire signal de bits $Sa(n)$, $Sb(n)$ comprenant le bit calculé par chacun des calculateurs (A, B) ;
- un module de détermination de paire produit (5) configuré pour que chacun des calculateurs (A, B) détermine

$$Pa(n) = \begin{Bmatrix} pa0 \\ pa1 \end{Bmatrix}, \quad Pb(n) = \begin{Bmatrix} pb0 \\ pb1 \end{Bmatrix}$$

une paire produit de bits $Pa(n)$ =, la paire produit de bits $Pa(n)$, $Pb(n)$ indiquant quel bit égal à 1 de la paire signal de bits $Sa(n)$, $Sb(n)$ déterminée pour l'un des calculateurs (A, B) à l'itération n est égal au bit de la paire signal de bits $Sa(n - 1)$, $Sb(n - 1)$ déterminée pour l'autre des calculateurs (A, B) à l'itération n-1 ;
- un module de détermination de paire reste (6) configuré pour que chacun des calculateurs (A, B) détermine

$$Ra(n) = \begin{Bmatrix} ra0 \\ ra1 \end{Bmatrix}, \quad Rb(n) = \begin{Bmatrix} rb0 \\ rb1 \end{Bmatrix}$$

une paire reste de bits, la paire reste de bits $Ra(n)$, $Rb(n)$ indiquant quel bit égal à 1 de la paire signal de bits $Sa(n)$, $Sb(n)$ déterminée pour l'un des calculateurs (A, B) à l'itération n est différent du bit de la paire signal de bits $Sa(n - 1)$, $Sb(n - 1)$ déterminée pour l'autre des calculateurs (A, B) à l'itération n-1 ;
- un module de détermination de signal synchronisé (7) configuré pour que chacun des calculateurs (A, B) détermine un signal synchronisé à partir de la paire produit de bits $Pa(n)$, $Pb(n)$ et de la paire reste de bits $Ra(n)$, $Rb(n)$,

le module de détermination de signal synchronisé (7) comprenant les sous-modules suivants :

- un sous-module de détermination (7A) compris dans le premier calculateur (A) configuré pour déterminer un premier signal synchronisé $Oa(n)$,

• si $Pa(n) = \begin{Bmatrix} 0 \\ 0 \end{Bmatrix}$, le premier signal synchronisé $Oa(n)$ est égal au premier signal synchronisé $Oa(n - 1)$ à l'itération n-1,

• si $Pa(n) \neq \begin{Bmatrix} 0 \\ 0 \end{Bmatrix}$ et si $ra0 = 0$, le premier signal synchronisé $Oa(n)$ est égal à l'ordre de commande $Ia(n - 1)$ calculé par le premier calculateur (A) à l'itération n-1,

• si $Pa(n) \neq \begin{Bmatrix} 0 \\ 0 \end{Bmatrix}$ et si $ra0 = 1$, le premier signal synchronisé $Oa(n)$ est égal à l'ordre de commande $Ia(n - 2)$ calculé par le premier calculateur (A) à l'itération n-2 ;

- un sous-module de détermination (7B) compris dans le deuxième calculateur (B) configuré pour déterminer un deuxième signal synchronisé $Ob(n)$,

• si $Pb(n) = \begin{Bmatrix} 0 \\ 0 \end{Bmatrix}$, le deuxième signal synchronisé $Ob(n)$ est égal au deuxième signal synchronisé $Ob(n$

- 1) à l'itération n-1,

- si $Pb(n) \neq \begin{Bmatrix} 0 \\ 0 \end{Bmatrix}$ et si *rb0* = 0, le deuxième signal synchronisé *Ob(n)* est égal à l'ordre de commande *Ib(n* - 1) calculé par le deuxième calculateur (B) à l'itération n-1,

- si $Pb(n) \neq \begin{Bmatrix} 0 \\ 0 \end{Bmatrix}$ et si *rb0* = 1, le deuxième signal synchronisé *Ob(n)* est égal à l'ordre de commande *Ib(n* - 2) calculé par le deuxième calculateur (B) à l'itération n-2.

**8.** Ensemble selon la revendication 7,
**caractérisé en ce que** le module de calcul (2) comprend les sous-modules suivants :

    - un premier sous-module de calcul (2A) du premier calculateur (A) configuré pour calculer un premier bit, le premier bit étant égal à 0 si l'ordre de commande *Ia(n)* calculé par le premier calculateur (A) à l'itération n est égal à l'ordre de commande *Ia(n* - 1) calculé à l'itération n-1, sinon le premier bit étant égal à 1 ;
    - un deuxième sous-module de calcul (2B) du deuxième calculateur (B) configuré pour calculer un deuxième bit, le deuxième bit étant égal à 0 si l'ordre de commande *Ib(n)* calculé par le deuxième calculateur (B) à l'itération n est égal à l'ordre de commande *Ib(n* - 1) calculé à l'itération n-1, sinon le deuxième bit étant égal à 1.

**9.** Ensemble selon selon la revendication 8,
**caractérisé en ce que** le module d'échange (3) comprend les sous-modules suivants :

    - un premier sous-module de transmission (3A) du premier calculateur (A) configuré pour transmettre au deuxième calculateur (B) le premier bit ;
    - un deuxième sous-module de transmission (3B) du deuxième calculateur (B) configuré pour transmettre au premier calculateur (A) le deuxième bit.

**10.** Ensemble selon l'une quelconque des revendications 7 à 9,
**caractérisé en ce que** le module de détermination de paire signal (4) comprend les sous-modules suivants :

    - un sous-module de détermination (4A) compris dans le premier calculateur (A) configuré pour déterminer la première paire signal de bits $Sa(n) = \begin{Bmatrix} sa0 \\ sa1 \end{Bmatrix}$ dans laquelle *sa0* est un premier bit propre égal au premier bit calculé à l'itération n-1 et *sa1* est un deuxième bit opposé égal au deuxième bit calculé à l'itération n-1 ;
    - un sous-module de détermination (4B) compris dans le deuxième calculateur (B) configuré pour déterminer la deuxième paire signal de bits $Sb(n) = \begin{Bmatrix} sb0 \\ sb1 \end{Bmatrix}$ dans laquelle *sb0* est un deuxième bit propre égal au deuxième bit calculé à l'itération n-1 et *sb1* est un premier bit opposé égal au premier bit calculé à l'itération n-1.

**11.** Ensemble selon l'une quelconque des revendications 7 à 10, **caractérisé en ce que** le module de détermination de paire produit (5) comprend les sous-modules suivants : compris dans le

    - un sous-module de détermination (5A) premier calculateur (A) configuré pour déterminer la première paire produit de bits $Pa(n) = \begin{Bmatrix} pa0 \\ pa1 \end{Bmatrix}$ dans laquelle *pa0* est un bit propre et *pa1* est un bit opposé,

- $Pa(n) = \begin{Bmatrix} 1 \\ 1 \end{Bmatrix}$ si ( $Ra(n-1) = \begin{Bmatrix} 1 \\ 1 \end{Bmatrix}$ ou $Ra(n-1) = \begin{Bmatrix} 0 \\ 0 \end{Bmatrix}$ ) et $Sa(n) = \begin{Bmatrix} 1 \\ 1 \end{Bmatrix}$ , *Ra(n* - 1) correspondant à une paire reste de bits déterminée à l'itération n-1,

- $Pa(n) = \begin{Bmatrix} 1 \\ 0 \end{Bmatrix}$ si ( $Ra(n-1) = \begin{Bmatrix} 0 \\ 1 \end{Bmatrix}$ et $Sa(n) = \begin{Bmatrix} 1 \\ 1 \end{Bmatrix}$ ) ou (Ra(n - 1) $= \begin{Bmatrix} 0 \text{ ou } 1 \\ 1 \end{Bmatrix}$ et $Sa(n) = \begin{Bmatrix} 1 \\ 0 \end{Bmatrix}$ ),

- $Pa(n) = \begin{Bmatrix} 0 \\ 1 \end{Bmatrix}$ si ( $Ra(n-1) = \begin{Bmatrix} 1 \\ 0 \end{Bmatrix}$ et $Sa(n) = \begin{Bmatrix} 1 \\ 1 \end{Bmatrix}$ ) ou (Ra(n - 1) $= \begin{Bmatrix} 1 \\ 1 \text{ ou } 0 \end{Bmatrix}$ et

$$Sa(n) = \begin{Bmatrix} 0 \\ 1 \end{Bmatrix},$$

• sinon $Pa(n) = \begin{Bmatrix} 0 \\ 0 \end{Bmatrix}$ ;

- un sous-module de détermination (5B) du deuxième calculateur (B) configuré pour déterminer deuxième paire produit de bits $Pb(n) = \begin{Bmatrix} pb0 \\ pb1 \end{Bmatrix}$ dans laquelle $pb0$ est un bit propre et $pb1$ est un bit opposé,

• $Pb(n) = \begin{Bmatrix} 1 \\ 1 \end{Bmatrix}$ si ( $Rb(n-1) = \begin{Bmatrix} 1 \\ 1 \end{Bmatrix}$ ou $Rb(n-1) = \begin{Bmatrix} 0 \\ 0 \end{Bmatrix}$ ) et $Sb(n) = \begin{Bmatrix} 1 \\ 1 \end{Bmatrix}$, $Rb(n$ - 1)

correspondant à une paire reste de bits déterminée à l'itération n-1,

• $Pb(n) = \begin{Bmatrix} 1 \\ 0 \end{Bmatrix}$ si ( $Rb(n-1) = \begin{Bmatrix} 0 \\ 1 \end{Bmatrix}$ et $Sb(n) = \begin{Bmatrix} 1 \\ 1 \end{Bmatrix}$ ) ou ($Rb(n$ - 1$) = \begin{Bmatrix} 0 \text{ ou } 1 \\ 1 \end{Bmatrix}$ et

$Sb(n) = \begin{Bmatrix} 1 \\ 0 \end{Bmatrix}$ ),

• $Pb(n) = \begin{Bmatrix} 0 \\ 1 \end{Bmatrix}$ si ( $Rb(n-1) = \begin{Bmatrix} 1 \\ 0 \end{Bmatrix}$ et $Sb(n) = \begin{Bmatrix} 1 \\ 1 \end{Bmatrix}$ ) ou ($Rb(n$ - 1$) = \begin{Bmatrix} 1 \\ 1 \text{ ou } 0 \end{Bmatrix}$ et

$Sb(n) = \begin{Bmatrix} 0 \\ 1 \end{Bmatrix}$ ),

• sinon $Pb(n) = \begin{Bmatrix} 0 \\ 0 \end{Bmatrix}$ .

**12.** Ensemble selon l'une quelconque des revendications 7 à 11, **caractérisé en ce que** le module de détermination de paire reste (6) comprend les sous-modules suivants :

- un sous-module de détermination (6A) compris dans le premier calculateur (A) configuré pour déterminer la première paire reste de bits $Ra(n)$ dans laquelle ra0 est un bit propre, ra1 est un bit opposé et

$$Ra(n) = \qquad Sa(n) \text{ XOR } Pa(n) ;$$

- un sous-module de détermination (6B) compris dans le deuxième calculateur (B) configuré pour déterminer la deuxième paire reste de bits $Rb(n)$ ans laquelle $rb0$ est un bit propre, $rb1$ est un bit opposé et $Rb(n) = Sb(n)$ XOR $Pb(n)$.

**13.** Système de commande de vol d'un aéronef, **caractérisé en ce qu'**il comprend au moins un ensemble tel que celui spécifié dans l'une quelconque des revendications 8 à 12.

**14.** Aéronef,
**caractérisé en ce qu'**il comporte un système de commande de vol tel que celui spécifié dans la revendication 13.

**Patentansprüche**

**1.** Verfahren zur Synchronisation eines ersten Rechners (A) und eines zweiten Rechners (B), wobei jeder der Rechner (A, B) konfiguriert ist, um Steuerbefehle zu berechnen, die dazu bestimmt sind, einen Aktuator der Steuerfläche eines Luftfahrzeugs (AC) gemäß einem gleichen Steuergesetz zu steuern, wobei jeder der Rechner (A, B) einen miteinander synchronisierten Taktgeber umfasst, wobei der erste Rechner (A) eine Verfrühung oder eine Verspätung in Bezug auf den zweiten Rechner (B) aufweist, wobei die Verfrühung oder die Verspätung unbekannt und zeitlich begrenzt ist;
**dadurch gekennzeichnet, dass** es eine Reihe von Schritten umfasst, die iterativ durchgeführt werden, wobei die Reihe von Schritten, die bei jeder Iteration n durchgeführt wird, Folgendes umfasst:

- einen Berechnungsschritt (E1), der von einem Berechnungsmodul (2) durchgeführt wird, der darin besteht, dass jeder der Rechner (A, B) ein Bit berechnet, wobei das Bit gleich 0 ist, wenn der Steuerbefehl $la(n)$, $lb(n)$, der von jedem der Rechner (A, B) bei der Iteration n berechnet wird, gleich dem Steuerbefehl $la(n --1)$, $lb(n - 1)$ ist, der bei der Iteration n-1 berechnet wird, wobei das Bit andernfalls gleich 1 ist;

- einen Austauschschritt (E2), der von einem Austauschmodul (3) durchgeführt wird, der darin besteht, dass jeder der Rechner (A, B) das berechnete Bit austauscht;

- einen Schritt (E3) zur Bestimmung eines Signalpaars, der von einem Signalpaar-Bestimmungsmodul (4) durchgeführt wird, der darin besteht, dass jeder der Rechner (A, B) ein Signalpaar von Bits $Sa(n)=\left\{{sa0 \atop sa1}\right\}$, $Sb(n)=\left\{{sb0 \atop sb1}\right\}$ bestimmt, wobei das Signalpaar von Bits $Sa(n)$, $Sb(n)$ das von jedem der Rechner (A, B) berechnete Bit umfasst;

- einen Schritt (E4) zur Bestimmung des Produktpaars, der von einem Produktpaar-Bestimmungsmodul (5) durchgeführt wird, der darin besteht, dass jeder der Rechner (A, B) ein Produktpaar von Bits $Pa(n)=\left\{{pa0 \atop pa1}\right\}$, $Pb(n)=\left\{{pb0 \atop pb1}\right\}$ bestimmt, wobei das Produktpaar von Bits $Pa(n)$, $Pb(n)$ anzeigt, welches Bit gleich 1 des Signalpaars von Bits $Sa(n)$, $Sb(n)$, das für einen der Rechner (A, B) bei der Iteration n bestimmt wird, gleich dem Bit des Signalpaars von Bits $Sa(n - 1)$, $Sb(n - 1)$ ist, das für den anderen der Rechner (A, B) bei der Iteration n-1 bestimmt wird;

- einen Schritt (E5) zur Bestimmung des Restpaars, der von einem Restpaar-Bestimmungsmodul (6) durchgeführt wird, der darin besteht, dass jeder der Rechner (A, B) ein Restpaar von Bits $Ra(n)=\left\{{ra0 \atop ra1}\right\}$, $Rb(n)=\left\{{rb0 \atop rb1}\right\}$ bestimmt, wobei das Restpaar von Bits $Ra(n)$, $Rb(n)$ anzeigt, welches Bit gleich 1 des Signalpaars von Bits $Sa(n)$, $Sb(n)$, das für einen der Rechner (A, B) bei der Iteration n bestimmt wird, sich von dem Bit des Signalpaars von Bits $Sa(n - 1)$, $Sb(n - 1)$, das für den anderen der Rechner (A, B) bei der Iteration n-1 bestimmt wird, unterscheidet;

- einen Schritt (E6) zur Bestimmung eines synchronisierten Signals, der von einem Synchronisationssignal-Bestimmungsmodul (7) durchgeführt wird, wobei jeder der Rechner (A, B) ein synchronisiertes Signal aus dem Produktpaar von Bits $Pa(n)$, $Pb(n)$ und dem Restpaar von Bits $Ra(n)$, $Rb(n)$ bestimmt;

wobei der Schritt (E6) zur Bestimmung des synchronisierten Signals die folgenden Unterschritte umfasst:

- einen Bestimmungsunterschritt (E6A), der von einem Bestimmungsuntermodul (7A) des in dem ersten Rechner (A) enthaltenen Synchronisationssignal-Bestimmungsmoduls (7) durchgeführt wird,
der aus der Bestimmung eines ersten synchronisierten Signals $0a(n)$ besteht,

- wenn $Pa(n)=\left\{{0 \atop 0}\right\}$, ist das erste synchronisierte Signal $0a(n)$ gleich dem ersten synchronisierten Signal 0a(n-1) bei der Iteration n-1,

- wenn $Pa(n)\neq \left\{{0 \atop 0}\right\}$ und wenn $ra0$=0, ist das erste synchronisierte Signal $0a(n)$ gleich dem Steuerbefehl la(n-1), der von dem ersten Rechner (A) bei der Iteration n-1 berechnet wird,

- wenn $Pa(n)\neq \left\{{0 \atop 0}\right\}$ und $ra0$=1, ist das erste synchronisierte Signal $0a(n)$ gleich dem Steuerbefehl $la(n-$2), der von dem ersten Rechner (A) bei der Iteration n-2 berechnet wird;

- einen Bestimmungsunterschritt (E6B), der von einem Bestimmungsuntermodul (7B) des in dem zweiten Rechner (B) enthaltenen Synchronisationssignal-Bestimmungsmoduls (7) durchgeführt wird,
der aus der Bestimmung eines zweiten synchronisierten Signals $0b(n)$ besteht,

- wenn $Pb(n)=\left\{{0 \atop 0}\right\}$, ist das zweite synchronisierte Signal $0b(n)$ gleich dem zweiten synchronisierten Signal $0b(n - 1)$ bei der Iteration n-1,

- wenn $Pb(n)\neq \left\{{0 \atop 0}\right\}$ und wenn $rb0$=0, ist das zweite synchronisierte Signal $0b(n)$ gleich dem Steuerbefehl $lb(n - 1)$, der von dem zweiten Rechner (B) bei der Iteration n-1 berechnet wird,

- wenn $Pb(n)\neq \left\{{0 \atop 0}\right\}$ und wenn $rb0$=1, ist das zweite synchronisierte Signal $0b(n)$ gleich dem Steuerbefehl $lb(n - 2)$, der von dem zweiten Rechner (B) bei der Iteration n-2 berechnet wird.

2. Verfahren nach Anspruch 1,

**dadurch gekennzeichnet, dass** der Berechnungsschritt (E1) die folgenden Unterschritte umfasst:

- einen ersten Berechnungsunterschritt (E1A), der von einem in dem ersten Rechner (A) enthaltenen ersten Berechnungsuntermodul (2A) durchgeführt wird, der darin besteht, ein erstes Bit zu berechnen, wobei das erste Bit gleich 0 ist, wenn der von dem ersten Rechner (A) berechnete Steuerbefehl la(n) bei der Iteration n gleich dem bei der Iteration n-1 berechneten Steuerbefehl *la(n - 1)* ist, wobei das erste Bit andernfalls gleich 1 ist;
- einen zweiten Berechnungsunterschritt (E1B), der von einem in dem zweiten Rechner (B) enthaltenen zweiten Berechnungsuntermodul (2B) durchgeführt wird,

der darin besteht, ein zweites Bit zu berechnen, wobei das zweite Bit gleich 0 ist, wenn der von dem zweiten Rechner (B) berechnete Steuerbefehl *lb(n)* bei der Iteration n gleich dem bei der Iteration n-1 berechneten Steuerbefehl *lb(n - 1)* ist, wobei das zweite Bit andernfalls gleich 1 ist.

3. Verfahren nach Anspruch 2,
   **dadurch gekennzeichnet, dass** der Austauschschritt (E2) die folgenden Unterschritte umfasst:

   - einen ersten Übertragungsunterschritt (E2A), der von einem ersten Übertragungsuntermodul (3A) des ersten Rechners (A) durchgeführt wird, der darin besteht, an den zweiten Rechner (B) das erste Bit zu übertragen;
   - einen zweiten Übertragungsunterschritt (E2B), der von einem zweiten Übertragungsuntermodul (3B) des zweiten Rechners (B) durchgeführt wird, der darin besteht, das zweite Bit an den ersten Rechner (A) zu übertragen.

4. Verfahren nach einem der Ansprüche 1 bis 3,
   **dadurch gekennzeichnet, dass** der Signalpaar-Bestimmungsschritt (E3) die folgenden Unterschritte umfasst:

   - einen Bestimmungsunterschritt (E3A), der von einem Bestimmungsuntermodul (4A) des in dem ersten Rechner (A) enthaltenen Signalpaar-Bestimmungsmoduls (4) durchgeführt wird,

   der aus der Bestimmung des ersten Signalpaar von Bits $Sa(n) = \begin{Bmatrix} sa0 \\ sa1 \end{Bmatrix}$ besteht,
   wobei *sa*0 ein eigenes Bit ist, das gleich dem ersten Bit ist, das bei der Iteration n-1 berechnet wird, und *sa*1 ein entgegengesetztes Bit ist, das gleich dem zweiten Bit ist, das bei der Iteration n-1 berechnet wird;

   - einen Bestimmungsunterschritt (E3B), der von einem Bestimmungsuntermodul (4B) des in dem zweiten Rechner (B) enthaltenen Signalpaar-Bestimmungsmoduls (4) durchgeführt wird,

   der aus der Bestimmung des zweiten Signalpaars von Bits $Sb(n) = \begin{Bmatrix} sb0 \\ sb1 \end{Bmatrix}$ besteht,
   wobei *sb0* ein eigenes Bit ist, das gleich dem zweiten Bit ist, das bei der Iteration n-1 berechnet wird, und *sb1* ein entgegengesetztes Bit ist, das gleich dem ersten Bit ist, das bei der Iteration n-1 berechnet wird.

5. Verfahren nach einem der Ansprüche 1 bis 4,
   **dadurch gekennzeichnet, dass** der Produktpaar-Bestimmungsschritt (E4) die folgenden Unterschritte umfasst:

   - einen Bestimmungsunterschritt (E4A), der von einem Bestimmungsuntermodul (5A) des in dem ersten Rechner (A) enthaltenen Produktpaar-Bestimmungsmoduls (5) durchgeführt wird,

   der aus der Bestimmung des ersten Produktpaars von Bits $Pa(n) = \begin{Bmatrix} pa0 \\ pa1 \end{Bmatrix}$ besteht,
   wobei *pa*0 ein eigenes Bit ist und pa1 ein entgegengesetztes Bit ist,

   - $Pa(n) = \begin{Bmatrix} 1 \\ 1 \end{Bmatrix}$, wenn ( $Ra(n - 1) = \begin{Bmatrix} 1 \\ 1 \end{Bmatrix}$ oder $Ra(n - 1) = \begin{Bmatrix} 0 \\ 0 \end{Bmatrix}$ und $Sa(n) = \begin{Bmatrix} 1 \\ 1 \end{Bmatrix}$, wobei Ra(n-1) einem Restpaar von Bits entspricht, das bei der Iteration n-1 bestimmt wird,

   - $Pa(n) = \begin{Bmatrix} 1 \\ 0 \end{Bmatrix}$, wenn ( $Ra(n-1) = \begin{Bmatrix} 0 \\ 1 \end{Bmatrix}$ und $Sa(n) = \begin{Bmatrix} 1 \\ 1 \end{Bmatrix}$ ) oder (Ra(n - 1) = $\begin{Bmatrix} 0 \ oder \ 1 \\ 1 \end{Bmatrix}$ und $Sa(n) = \begin{Bmatrix} 1 \\ 0 \end{Bmatrix}$ ),

   - $Pa(n) = \begin{Bmatrix} 0 \\ 1 \end{Bmatrix}$, wenn ( $Ra(n-1) = \begin{Bmatrix} 1 \\ 0 \end{Bmatrix}$ und $Sa(n) = \begin{Bmatrix} 1 \\ 1 \end{Bmatrix}$ ) oder (Ra(n - 1) = $\begin{Bmatrix} 1 \\ 1 \ oder \ 0 \end{Bmatrix}$ und

$$Sa(n) = \begin{Bmatrix} 0 \\ 1 \end{Bmatrix},$$

- andernfalls $Pa(n) = \begin{Bmatrix} 0 \\ 0 \end{Bmatrix}$ ;

- einen Bestimmungsunterschritt (E4B), der von einem Bestimmungsuntermodul (5B) des in dem zweiten Rechner (B) enthaltenen Produktpaar-Bestimmungsmoduls (5) durchgeführt wird,

der aus der Bestimmung des zweiten Produktpaars von Bits $Pb(n) = \begin{Bmatrix} pb0 \\ pb1 \end{Bmatrix}$ besteht, wobei *pb*0 eigenes Bit ist und *pb*1 ein entgegengesetztes Bit ist,

- $Pb(n) = \begin{Bmatrix} 1 \\ 1 \end{Bmatrix}$ wenn ( $Rb(n-1) = \begin{Bmatrix} 1 \\ 1 \end{Bmatrix}$ oder $Rb(n-1) = \begin{Bmatrix} 0 \\ 0 \end{Bmatrix}$ ) und $Sb(n) = \begin{Bmatrix} 1 \\ 1 \end{Bmatrix}$ , wobei *Rb(n* - 1) einem Restpaar von Bits entspricht, das bei der Iteration n-1 bestimmt wird,

- $Pb(n) = \begin{Bmatrix} 1 \\ 0 \end{Bmatrix}$ , wenn ( $Rb(n-1) = \begin{Bmatrix} 0 \\ 1 \end{Bmatrix}$ und $Sb(n) = \begin{Bmatrix} 1 \\ 1 \end{Bmatrix}$ ) oder ($Rb(n$ -1)= $\begin{Bmatrix} 0 \ oder \ 1 \\ 1 \end{Bmatrix}$ und

$Sb(n) = \begin{Bmatrix} 1 \\ 0 \end{Bmatrix}$ ),

- $Pb(n) = \begin{Bmatrix} 0 \\ 1 \end{Bmatrix}$ , wenn ( $Rb(n-1) = \begin{Bmatrix} 1 \\ 0 \end{Bmatrix}$ und $Sb(n) = \begin{Bmatrix} 1 \\ 1 \end{Bmatrix}$ ) oder ($Rb(n$ -1)= $\begin{Bmatrix} 1 \\ 1 \ oder \ 0 \end{Bmatrix}$ und

$Sb(n) = \begin{Bmatrix} 0 \\ 1 \end{Bmatrix}$ ),

- andernfalls $Pb(n) = \begin{Bmatrix} 0 \\ 0 \end{Bmatrix}$ .

6. Verfahren nach einem der Ansprüche 1 bis 5,
**dadurch gekennzeichnet, dass** der Restpaar-Bestimmungsschritt (E5) die folgenden Unterschritte umfasst:

- einen Bestimmungsunterschritt (E5A), der von einem Bestimmungsuntermodul (6A) des in dem ersten Rechner (A) enthaltenen Restpaar-Bestimmungsmoduls (6) durchgeführt wird,
der aus der Bestimmung des ersten Restpaares von Bits Ra(n) besteht, wobei *ra*0 ein eigenes Bit ist, *ra*1 ein entgegengesetztes Bit ist und Ra(*n*) = Sa(*n*) XOR Po(n);
- einen Bestimmungsunterschritt (E5B), der von einem Bestimmungsuntermodul (6B) des in dem zweiten Rechner (B) enthaltenen Restpaar-Bestimmungsmoduls (6) durchgeführt wird,

der aus der Bestimmung des zweiten Restpaars von Bits Rb(n) besteht,
wobei *rb0* ein eigenes Bit ist, *rb1* ein entgegengesetztes Bit und *Rb(n)=Sb(n)* XOR *Pb(n)* ist.

7. Baugruppe, die einen ersten Rechner (A), einen zweiten Rechner (B) und ein System zur Synchronisation des ersten Rechners (A) und des zweiten Rechners (B) umfasst,

wobei jeder der Rechner (A, B) konfiguriert ist, um Steuerbefehle zu berechnen, die dazu bestimmt sind, einen Aktuator der Steuerfläche eines Luftfahrzeugs (AC) gemäß einem gleichen Steuergesetz zu steuern, wobei jeder der Rechner (A, B) einen miteinander synchronisierten Taktgeber umfasst, wobei der erste Rechner (A) eine Verfrühung oder eine Verspätung in Bezug auf den zweiten Rechner (B) aufweist, wobei die Verfrühung oder die Verspätung unbekannt und zeitlich begrenzt ist;
**dadurch gekennzeichnet, dass** das Synchronisationssystem eine Baugruppe von Modulen umfasst, die für eine Durchführung auf iterative Weise konfiguriert sind,
wobei die Baugruppe von Modulen für eine Durchführung bei jeder Iteration n Folgendes aufweist:

- ein Berechnungsmodul (2), das so konfiguriert ist, dass jeder der Rechner (A, B) ein Bit berechnet, wobei das Bit gleich 0 ist, wenn der Steuerbefehl *Ia*(*n*), *Ib*(*n*), der von jedem der Rechner (A, B) bei der Iteration n berechnet wird, gleich dem Steuerbefehl Ia(n - 1), *Ib(n* - 1) ist, der bei der Iteration n-1 berechnet wird, wobei das Bit andernfalls gleich 1 ist;
- ein Austauschmodul (3), das so konfiguriert ist, dass jeder der Rechner (A, B) das berechnete Bit austauscht;
- ein Signalpaar-Bestimmungsmodul (4), das so konfiguriert ist, dass jeder der Rechner (A, B) ein Signalpaar

von Bits $Sa(n)=\begin{Bmatrix}sa0\\sa1\end{Bmatrix}$, $Sb(n)=\begin{Bmatrix}sb0\\sb1\end{Bmatrix}$ bestimmt, wobei das Signalpaar von Bits $Sa(n)$, $Sb(n)$ das von jedem der Rechner (A, B) berechnete Bit umfasst;

- ein Produktpaar-Bestimmungsmodul (5), das so konfiguriert ist, dass jeder der Rechner (A, B) ein Produktpaar von Bits $Pa(n)=\begin{Bmatrix}pa0\\pa1\end{Bmatrix}$, $Pb(n)=\begin{Bmatrix}pb0\\pb1\end{Bmatrix}$ bestimmt, wobei das Produktpaar von Bits $Pa(n)$, $Pb(n)$ anzeigt, welches Bit gleich 1 des Signalpaars von Bits $Sa(n)$, $Sb(n)$, das für einen der Rechner (A, B) bei der Iteration n bestimmt wird, gleich dem Bit des Signalpaars von Bits $Sa(n - 1)$, $Sb(n - 1)$ ist, das für den anderen der Rechner (A, B) bei der Iteration n-1 bestimmt wird;
- ein Restpaar-Bestimmungsmodul (6), das so konfiguriert ist, dass jeder der Rechner (A, B) ein Restpaar

von Bits $Ra(n)=\begin{Bmatrix}ra0\\ra1\end{Bmatrix}$, $Rb(n)=\begin{Bmatrix}rb0\\rb1\end{Bmatrix}$ bestimmt, wobei das Restpaar von Bits $Ra(n)$, Rb(n) anzeigt, welches Bit gleich 1 des Signalpaares von Bits $Sa(n)$, $Sb(n)$, das für einen der Rechner (A, B) bei der Iteration n bestimmt wird, sich von dem Bit des Signalpaars von Bits $Sa(n - 1)$, $Sb(n - 1)$, das für den anderen der Rechner (A, B) bei der Iteration n-1 bestimmt wird, unterscheidet;
- ein Synchronisationssignal-Bestimmungsmodul (7), das so konfiguriert ist, dass jeder der Rechner (A, B) ein synchronisiertes Signal aus dem Produktpaar von Bits $Pa(n)$, $Pb(n)$ und dem Restpaar von Bits $Ra(n)$, Rb(n) bestimmt,

wobei das Synchronisationssignal-Bestimmungsmodul (7) die folgenden Untermodule umfasst:

- ein Bestimmungsuntermodul (7A), der in dem ersten Rechner (A) enthalten ist,

der zur Bestimmung eines ersten synchronisierten Signals $0a(n)$ konfiguriert ist,

- wenn $Pa(n)=\begin{Bmatrix}0\\0\end{Bmatrix}$, ist das erste synchronisierte Signal $0a(n)$ gleich dem ersten synchronisierten Signal $0a(n - 1)$ bei der Iteration n-1,
- wenn $Pa(n)\neq\begin{Bmatrix}0\\0\end{Bmatrix}$ und wenn ra0=0, ist das erste synchronisierte Signal $0a(n)$ gleich dem Steuerbefehl la(n -1), der von dem ersten Rechner (A) bei der Iteration n-1 berechnet wird,
- wenn $Pa(n)\neq\begin{Bmatrix}0\\0\end{Bmatrix}$ und ra0=1, ist das erste synchronisierte Signal $0a(n)$ gleich dem Steuerbefehl la(n-2), der von dem ersten Rechner (A) bei der Iteration n-2 berechnet wird;
- ein Bestimmungsuntermodul (7B), das in dem zweiten

Rechner (B) enthalten ist, das zur Bestimmung eines zweiten synchronisierten Signals 0b(n) konfiguriert ist,

- wenn $Pb(n)=\begin{Bmatrix}0\\0\end{Bmatrix}$, das zweite synchronisierte Signal $0b(n)$ gleich dem zweiten synchronisierten Signal 0b(n-1) bei der Iteration n-1 ist,
- wenn $Pb(n)\neq\begin{Bmatrix}0\\0\end{Bmatrix}$ und wenn rb0=0, ist das zweite synchronisierte Signal $0b(n)$ gleich dem Steuerbefehl lb(n-1), der von dem zweiten Rechner (B) bei der Iteration n-1 berechnet wird,
- wenn $Pb(n)\neq\begin{Bmatrix}0\\0\end{Bmatrix}$ und wenn rb0=1, ist das zweite synchronisierte Signal $0b(n)$ gleich dem Steuerbefehl lb(n-2), der von dem zweiten Rechner (B) bei der Iteration n-2 berechnet wird.

8. Baugruppe nach Anspruch 7,
   **dadurch gekennzeichnet, dass** das Berechnungsmodul (2) die folgenden Untermodule umfasst:

   - ein erstes Berechnungsuntermodul (2A) des ersten Rechners (A), das konfiguriert ist, um ein erstes Bit zu berechnen, wobei das erste Bit gleich 0 ist, wenn der vom ersten Rechner (A) bei der Iteration n berechnete Steuerbefehl la(n) gleich dem bei der Iteration n-1 berechneten Steuerbefehl *la(n - 1)* ist, wobei das erste Bit andernfalls gleich 1 ist;
   - ein zweites Berechnungsuntermodul (2B) des zweiten Rechners (B), das konfiguriert ist, um ein zweites Bit zu berechnen, wobei das zweite Bit gleich 0 ist, wenn der vom zweiten Rechner (B) bei der Iteration n berechnete Steuerbefehl *Ib*(*n*) gleich dem bei der Iteration *n*-1 berechneten Steuerbefehl *Ib*(*n* - 1) ist, wobei das zweite Bit andernfalls gleich 1 ist.

9. Baugruppe nach Anspruch 8,
**dadurch gekennzeichnet, dass** das Austauschmodul (3) die folgenden Untermodule umfasst:

- ein erstes Übertragungsuntermodul (3A) des ersten Rechners (A), das konfiguriert ist, um an den zweiten Rechner (B) das erste Bit zu übertragen ;
- ein zweites Übertragungsuntermodul (3B) des zweiten Rechners (B), das konfiguriert ist, um an den ersten Rechner (A) das zweite Bit zu übertragen.

10. Baugruppe nach einem der Ansprüche 7 bis 9,
**dadurch gekennzeichnet, dass** das Signalpaar-Bestimmungsmodul (4) die folgenden Untermodule umfasst:

- ein Bestimmungsuntermodul (4A), das in dem ersten Rechner (A) enthalten ist, das konfiguriert ist, um das erste Signalpaar von Bits $Sa(n)=\begin{Bmatrix}sa0\\sa1\end{Bmatrix}$ zu bestimmen, wobei *sa*0 ein erstes eigenes Bit ist, das gleich dem ersten Bit ist, das bei der Iteration n-1 berechnet wird, und *sa*1 ein zweites entgegengesetztes Bit ist, das gleich dem zweiten Bit ist, das bei der Iteration n-1 berechnet wird;
- ein Bestimmungsuntermodul (4B), das in dem zweiten Rechner (B) enthalten ist, das konfiguriert ist, um das zweite Signalpaar von Bits $Sb(n)=\begin{Bmatrix}sb0\\sb1\end{Bmatrix}$ zu bestimmen, wobei *sb*0 ein zweites eigenes Bit ist, das gleich dem zweiten Bit ist, das bei der Iteration n-1 berechnet wird, und *sb*1 ein erstes entgegengesetztes Bit ist, das gleich dem ersten Bit ist, das bei der Iteration n-1 berechnet wird.

11. Baugruppe nach einem der Ansprüche 7 bis 10,

**dadurch gekennzeichnet, dass** das Produktpaar-Bestimmungsmodul (5) die folgenden Untermodule umfasst:

- ein Bestimmungsuntermodul (5A), das in dem ersten Rechner (A) enthalten ist, das konfiguriert ist, um das erste Produktpaar von Bits $Pa(n)=\begin{Bmatrix}pa0\\pa1\end{Bmatrix}$ zu bestimmen, wobei *pa*0 ein eigenes Bit ist und *pa*1 ein entgegengesetztes Bit ist,

- $Pa(n) = \begin{Bmatrix}1\\1\end{Bmatrix}$, wenn ( $Ra(n-1) = \begin{Bmatrix}1\\1\end{Bmatrix}$ oder $Ra(n-1) = \begin{Bmatrix}0\\0\end{Bmatrix}$ ) und $Sa(n) = \begin{Bmatrix}1\\1\end{Bmatrix}$, wobei *Ra*(*n*-1) einem Restpaar von Bits entspricht, das bei der Iteration n-1 bestimmt wird,

- $Pa(n) = \begin{Bmatrix}1\\0\end{Bmatrix}$, wenn ( $Ra(n-1) = \begin{Bmatrix}0\\1\end{Bmatrix}$ und $Sa(n) = \begin{Bmatrix}1\\1\end{Bmatrix}$ ) oder (*Ra*(*n* -1) = $\begin{Bmatrix}0\ oder\ 1\\1\end{Bmatrix}$ und $Sa(n) = \begin{Bmatrix}1\\0\end{Bmatrix}$ ),

- $Pa(n) = \begin{Bmatrix}0\\1\end{Bmatrix}$, wenn ( $Ra(n-1) = \begin{Bmatrix}1\\0\end{Bmatrix}$ und $Sa(n) = \begin{Bmatrix}1\\1\end{Bmatrix}$ ) oder (*Ra*(*n* - 1) = $\begin{Bmatrix}1\\1\ ou\ 0\end{Bmatrix}$ und $Sa(n) = \begin{Bmatrix}0\\1\end{Bmatrix}$ ),

- andernfalls $Pa(n) = \begin{Bmatrix}0\\0\end{Bmatrix}$ ;

- ein Bestimmungsuntermodul (5B) des zweiten Rechners (B), das konfiguriert ist, um das zweite Produktpaar von Bits $Pb(n)=\begin{Bmatrix}pb0\\pb1\end{Bmatrix}$ zu bestimmen, wobei Pb0 ein eigenes Bit ist und *pb*l ein entgegengesetztes Bit ist,

- $Pb(n) = \begin{Bmatrix}1\\1\end{Bmatrix}$, wenn [ $Rb(n-1) = \begin{Bmatrix}1\\1\end{Bmatrix}$ oder $Rb(n-1) = \begin{Bmatrix}0\\0\end{Bmatrix}$ und $Sb(n) = \begin{Bmatrix}1\\1\end{Bmatrix}$ ), wobei *Rb*(*n-1*) einem Restpaar von Bits entspricht, das bei der Iteration n-1 bestimmt wird,

$$- \quad Pb(n) = \left\{{}^1_0\right\}, \text{ wenn } \left[\; Rb(n-1) = \left\{{}^0_1\right\} \text{ und } Sb(n) = \left\{{}^1_1\right\}\right) \text{ oder } \left(Rb(n-1) = \left\{{}^{0 \; ou \; 1}_{\quad 1}\right\} \text{ und } Sb(n) = \left\{{}^1_0\right\}\right),$$

$$- \quad Pb(n) = \left\{{}^0_1\right\}, \text{ wenn } \left(\; Rb(n-1) = \left\{{}^1_0\right\} \text{ und } Sb(n) = \left\{{}^1_1\right\}\right) \text{ oder } \left(Rb(n-1) = \left\{{}^{\quad 1}_{1 \; oder \; 0}\right\} \text{ und } Sb(n) = \left\{{}^0_1\right\}\right),$$

$$- \text{ andernfalls } \quad Pb(n) = \left\{{}^0_0\right\}$$

**12.** Baugruppe nach einem der Ansprüche 7 bis 11,
**dadurch gekennzeichnet, dass** das Restpaar-Bestimmungsmodul (6) die folgenden Untermodule umfasst:

- ein Bestimmungsuntermodul (6A), das in dem ersten Rechner (A) enthalten ist, wobei es konfiguriert ist, um das erste Restpaar von Bits Ra(n) zu bestimmen, wobei ra0 ein eigenes Bit ist, $ra1$ ein entgegengesetztes Bit ist und

$$Ra(n) = Sa(n) \text{ XOR } Pa(n);$$

- ein Bestimmungsuntermodul (6B), das in dem zweiten Rechner (B) enthalten ist, wobei der zweite Rechner (B) konfiguriert ist, um das zweite Restpaar von Bits $Rb(n)$ zu bestimmen, wobei rb0 ein eigenes Bit ist, $rb1$ ein entgegengesetztes Bit ist und $Rb(n)=Sb(n)$ XOR $Pb(n)$.

**13.** Flugsteuerungssystem eines Luftfahrzeugs,
**dadurch gekennzeichnet, dass** es mindestens eine Baugruppe umfasst, wie sie in einem der Ansprüche 8 bis 12 spezifiziert ist.

**14.** Luftfahrzeug,
**dadurch gekennzeichnet, dass** es ein Flugsteuerungssystem aufweist, wie es in Anspruch 13 spezifiziert ist.

**Claims**

**1.** Method for synchronizing a first computer (A) and a second computer (B), each of the computers (A, B) being configured so as to compute control orders intended to control a control surface actuator of an aircraft (AC) in accordance with one and the same piloting law, each of the computers (A, B) comprising a clock, said clocks being synchronized with one another, the first computer (A) having an advance or a delay with respect to the second computer (B), the advance or the delay being unknown and limited in terms of time; **Characterized in that** it comprises a set of steps implemented iteratively, the set of steps implemented in each iteration n comprising:

- a computing step (E1), implemented by a computing module (2), consisting in each of the computers (A, B) computing a bit, the bit being equal to 0 if the control order $Ia(n)$, $Ib(n)$ computed by each of the computers (A, B) in the iteration n is equal to the control order $Ia(n-1)$, $Ib(n-1)$ computed in the iteration n-1, the bit otherwise being equal to 1;
- an exchange step (E2), implemented by an exchange module (3), consisting in each of the computers (A, B) exchanging the computed bit;
- a signal pair determination step (E3), implemented by a signal pair determination module (4), consisting in each of the computers (A, B) determining a bit signal pair $Sa(n) = \left\{{}^{sa0}_{sa1}\right\}, Sb(n) = \left\{{}^{sb0}_{sb1}\right\}$, the bit signal pair $Sa(n)$, $Sb(n)$ comprising the bit computed by each of the computers (A, B);
- a product pair determination step (E4), implemented by a product pair determination module (5), consisting in each of the computers (A, B) determining a bit product pair $Pa(n) = \left\{{}^{pa0}_{pa1}\right\}, Pb(n) = \left\{{}^{pb0}_{pb1}\right\}$, the bit product pair $Pa(n)$, $Pb(n)$ indicating which bit equal to 1 of the bit signal pair $Sa(n)$, $Sb(n)$ determined for one of the computers (A, B) in the iteration n is equal to the bit of the bit signal pair $Sa(n-1)$, $Sb(n-1)$ determined for the other of the computers (A, B) in the iteration n-1;

- a remainder pair determination step (E5), implemented by a remainder pair determination module (6), consisting in each of the computers (A, B) determining a bit remainder pair $Ra(n) = \begin{Bmatrix} ra0 \\ ra1 \end{Bmatrix}, \ Rb(n) = \begin{Bmatrix} rb0 \\ rb1 \end{Bmatrix}$,

the bit remainder pair *Ra(n)*, *Rb(n)* indicating which bit equal to 1 of the bit signal pair *Sa(n)*, *Sb(n)* determined for one of the computers (A, B) in the iteration n is different from the bit of the bit signal pair *Sa(n - 1)*, *Sb(n - 1)* determined for the other of the computers (A, B) in the iteration n-1;

- a synchronized signal determination step (E6), implemented by a synchronized signal determination module (7), consisting in each of the computers (A, B) determining a synchronized signal based on the bit product pair *Pa(n)*, *Pb(n)* and on the bit remainder pair *Ra(n)*, *Rb(n)*;

the synchronized signal determination step (E6) comprises the following substeps:

- a determination substep (E6A), implemented by a determination submodule (7A) of the synchronized signal determination module (7) comprised in the first computer (A), consisting in determining a first synchronized signal *Oa(n)*,

• if $Pa(n) = \begin{Bmatrix} 0 \\ 0 \end{Bmatrix}$, the first synchronized signal *Oa(n)* is equal to the first synchronized signal *Oa(n - 1)* in the iteration n-1,

• if $Pa(n) \neq \begin{Bmatrix} 0 \\ 0 \end{Bmatrix}$ and if *ra0* = 0, the first synchronized signal *Oa(n)* is equal to the control order *Ia(n - 1)* computed by the first computer in the iteration n-1,

• if $Pa(n) \neq \begin{Bmatrix} 0 \\ 0 \end{Bmatrix}$ and if *ra0* = 1, the first synchronized signal *Oa(n)* is equal to the control order *Ia(n - 2)* computed by the first computer in the iteration n-2;

- a determination substep (E6B), implemented by a determination submodule (7B) of the synchronized signal determination module (7) comprised in the second computer (B), consisting in determining a second synchronized signal *Ob(n)*,

• if $Pb(n) = \begin{Bmatrix} 0 \\ 0 \end{Bmatrix}$, the second synchronized signal *Ob(n)* is equal to the second synchronized signal *Ob(n - 1)* in the iteration n-1,

• if $Pb(n) \neq \begin{Bmatrix} 0 \\ 0 \end{Bmatrix}$ and if *rb0* = 0, the second synchronized signal *Ob(n)* is equal to the control order *Ib(n - 1)* computed by the second computer in the iteration n-1,

• if $Pb(n) \neq \begin{Bmatrix} 0 \\ 0 \end{Bmatrix}$ and if *rb0* = 1, the second synchronized signal *Ob(n)* is equal to the control order *Ib(n - 2)* computed by the second computer in the iteration n-2.

2. Method as claimed in claim 1,
   **characterized in that** the computing step (E1) comprises the following substeps:

   - a first computing substep (E1A), implemented by a first computing submodule (2A) comprised in the first computer (A), consisting in computing a first bit, the first bit being equal to 0 if the control order *Ia(n)* computed by the first computer (A) in the iteration n is equal to the control order *Ia(n - 1)* computed in the iteration n-1, the first bit otherwise being equal to 1;
   - a second computing substep (E1B), implemented by a second computing submodule (2B) comprised in the second computer (B), consisting in computing a second bit, the second bit being equal to 0 if the control order *Ib(n)* computed by the second computer (B) in the iteration n is equal to the control order *Ib(n - 1)* computed in the iteration n-1, the second bit otherwise being equal to 1.

3. Method as claimed in claim 2,
   **characterized in that** the exchange step (E2) comprises the following substeps:

   - a first transmission substep (E2A), implemented by a first transmission submodule (3A) of the first computer (A), consisting in transmitting the first bit to the second computer (B);
- a second transmission substep (E2B), implemented by a second transmission submodule (3B) of the second computer (B), consisting in transmitting the second bit to the first computer (A).

4. Method as claimed in any one of claims 1 to 3,
**characterized in that** the signal pair determination step (E3) comprises the following substeps:

- a determination substep (E3A), implemented by a determination submodule (4A) of the signal pair determination module (4) comprised in the first computer (A), consisting in determining the first bit signal pair $Sa(n) = \begin{Bmatrix} sa0 \\ sa1 \end{Bmatrix}$ in which $sa0$ is a specific bit equal to the first bit computed in the iteration n-1 and $sa1$ is an opposite bit equal to the second bit computed in the iteration n-1;
- a determination substep (E3B), implemented by a determination submodule (4B) of the signal pair determination module (4) comprised in the second computer (B), consisting in determining the second bit signal pair $Sb(n) = \begin{Bmatrix} sb0 \\ sb1 \end{Bmatrix}$ in which $sb0$ is a specific bit equal to the second bit computed in the iteration n-1 and $sb1$ is an opposite bit equal to the first bit computed in the iteration n-1.

5. Method as claimed in any one of claims 1 to 4,
**characterized in that** the product pair determination step (E4) comprises the following substeps:

- a determination substep (E4A), implemented by a determination submodule (5A) of the product pair determination module (5) comprised in the first computer (A), consisting in determining the first bit product pair $Pa(n) = \begin{Bmatrix} pa0 \\ pa1 \end{Bmatrix}$ in which $pa0$ is a specific bit and $pa1$ is an opposite bit,

• $Pa(n) = \begin{Bmatrix} 1 \\ 1 \end{Bmatrix}$ if ( $Ra(n-1) = \begin{Bmatrix} 1 \\ 1 \end{Bmatrix}$ or $Ra(n-1) = \begin{Bmatrix} 0 \\ 0 \end{Bmatrix}$ ) and $Sa(n) = \begin{Bmatrix} 1 \\ 1 \end{Bmatrix}$, $Ra(n - 1)$ corresponding to a bit remainder pair determined in the iteration n-1,

• $Pa(n) = \begin{Bmatrix} 1 \\ 0 \end{Bmatrix}$ if ( $Ra(n-1) = \begin{Bmatrix} 0 \\ 1 \end{Bmatrix}$ and $Sa(n) = \begin{Bmatrix} 1 \\ 1 \end{Bmatrix}$ ) or ( $Ra(n-1) = \begin{Bmatrix} 0 \text{ or } 1 \\ 1 \end{Bmatrix}$ and $Sa(n) = \begin{Bmatrix} 1 \\ 0 \end{Bmatrix}$ ),

• $Pa(n) = \begin{Bmatrix} 0 \\ 1 \end{Bmatrix}$ if ( $Ra(n-1) = \begin{Bmatrix} 1 \\ 0 \end{Bmatrix}$ and $Sa(n) = \begin{Bmatrix} 1 \\ 1 \end{Bmatrix}$ ) or ( $Ra(n-1) = \begin{Bmatrix} 1 \\ 1 \text{ or } 0 \end{Bmatrix}$ and $Sa(n) = \begin{Bmatrix} 0 \\ 1 \end{Bmatrix}$ ),

• otherwise $Pa(n) = \begin{Bmatrix} 0 \\ 0 \end{Bmatrix}$ ;

- a determination substep (E4B), implemented by a determination submodule (5B) of the product pair determination module (5) comprised in the second computer (B), consisting in determining the second bit product pair $Pb(n) = \begin{Bmatrix} pb0 \\ pb1 \end{Bmatrix}$ in which $pb0$ is a specific bit and $pb1$ is an opposite bit,

• $Pb(n) = \begin{Bmatrix} 1 \\ 1 \end{Bmatrix}$ if ( $Rb(n-1) = \begin{Bmatrix} 1 \\ 1 \end{Bmatrix}$ or $Rb(n-1) = \begin{Bmatrix} 0 \\ 0 \end{Bmatrix}$ ) and $Sb(n) = \begin{Bmatrix} 1 \\ 1 \end{Bmatrix}$, $Rb(n - 1)$ corresponding to a bit remainder pair determined in the iteration n-1,

- $Pb(n) = \begin{Bmatrix} 1 \\ 0 \end{Bmatrix}$ if ( $Rb(n-1) = \begin{Bmatrix} 0 \\ 1 \end{Bmatrix}$ and $Sb(n) = \begin{Bmatrix} 1 \\ 1 \end{Bmatrix}$ ) or ( $Rb(n-1) = \begin{Bmatrix} 0 \text{ or } 1 \\ 1 \end{Bmatrix}$ and $Sb(n) = \begin{Bmatrix} 1 \\ 0 \end{Bmatrix}$ ),

- $Pb(n) = \begin{Bmatrix} 0 \\ 1 \end{Bmatrix}$ if $Rb(n-1) = \begin{Bmatrix} 1 \\ 0 \end{Bmatrix}$ and $Sb(n) = \begin{Bmatrix} 1 \\ 1 \end{Bmatrix}$ ) or ( $Rb(n-1) = \begin{Bmatrix} 1 \\ 1 \text{ or } 0 \end{Bmatrix}$ and $Sb(n) = \begin{Bmatrix} 0 \\ 1 \end{Bmatrix}$ ),

- otherwise $Pb(n) = \begin{Bmatrix} 0 \\ 0 \end{Bmatrix}$ .

6. Method as claimed in any one of claims 1 to 5,
   **characterized in that** the remainder pair determination step (E5) comprises the following substeps:

   - a determination substep (E5A), implemented by a determination submodule (6A) of the remainder pair determination module (6) comprised in the first computer (A), consisting in determining the first bit remainder pair $Ra(n) = \begin{Bmatrix} ra0 \\ ra1 \end{Bmatrix}$ in which *ra*0 is a specific bit, *ra*1 is an opposite bit and *Ra*(*n*) = *Sa*(*n*) XOR *Pa*(*n*) ;
   - a determination substep (E5B), implemented by a determination submodule (6B) of the remainder pair determination module (6) comprised in the second computer (B), consisting in determining the second bit remainder pair *Rb*(*n*) in which *rb0* is a specific bit, *rb*1 is an opposite bit and *Rb*(*n*) = *Sb*(*n*) XOR *Pb*(*n*).

7. Assembly comprising a first computer (A), a second computer (B) and a system for synchronizing a first computer (A) and a second computer (B), each of the computers (A, B) being configured so as to compute control orders intended to control a control surface actuator of an aircraft (AC) in accordance with one and the same piloting law, each of the computers (A, B) comprising a clock, said clocks being synchronized with one another, the first computer (A) having an advance or a delay with respect to the second computer (B), the advance or the delay being unknown and limited in terms of time;

   **characterized in that** the system for synchronizing comprises a set of modules configured for an iterative implementation, the set of modules for an implementation in each iteration n comprising:

   - a computing module (2) configured such that each of the computers (A, B) computes a bit, the bit being equal to 0 if the control order *Ia*(*n*), *Ib*(*n*) computed by each of the computers (A, B) in the iteration n is equal to the control order *Ia(n - 1)*, *Ib(n - 1)* computed in the iteration n-1, the bit otherwise being equal to 1;
   - an exchange module (3) configured such that each of the computers (A, B) exchanges the computed bit;
   - a signal pair determination module (4) configured such that each of the computers (A, B) determines a bit signal pair $Sa(n) = \begin{Bmatrix} sa0 \\ sa1 \end{Bmatrix}, Sb(n) = \begin{Bmatrix} sb0 \\ sb1 \end{Bmatrix}$ , the bit signal pair *Sa*(*n*), *Sb*(*n*) comprising the bit computed by each of the computers (A, B);
   - a product pair determination module (5) configured such that each of the computers (A, B) determines a bit product pair $Pa(n) = \begin{Bmatrix} pa0 \\ pa1 \end{Bmatrix}, Pb(n) = \begin{Bmatrix} pb0 \\ pb1 \end{Bmatrix}$ , the bit product pair *Pa*(*n*), *Pb*(*n*) indicating which bit equal to 1 of the bit signal pair *Sa*(*n*), *Sb*(*n*) determined for one of the computers (A, B) in the iteration n is equal to the bit of the bit signal pair *Sa*(*n* - 1), *Sb*(*n* - 1) determined for the other of the computers (A, B) in the iteration n-1;
   - a remainder pair determination module (6) configured such that each of the computers (A, B) determines a bit remainder pair $Ra(n) = \begin{Bmatrix} ra0 \\ ra1 \end{Bmatrix}$, $Rb(n) = \begin{Bmatrix} rb0 \\ rb1 \end{Bmatrix}$, the bit remainder pair $Ra(n)$, $Rb(n)$ indicating which bit equal to 1 of the bit signal pair $Sa(n)$, $Sb(n)$ determined for one of the computers (A, B) in the iteration n is different from the bit of the bit signal pair $Sa(n - 1)$, $Sb(n - 1)$ determined for the other of the computers (A, B) in the iteration n-1;
- a synchronized signal determination module (7) configured such that each of the computers (A, B) determines a synchronized signal based on the bit product pair $Pa(n)$, $Pb(n)$ and on the bit remainder pair $Ra(n)$, $Rb(n)$,

the synchronized signal determination module (7) comprises the following submodules:

- a determination submodule (7A) comprised in the first computer (A), configured so as to determine a first synchronized signal $Oa(n)$,

• if $Pa(n) = \begin{Bmatrix} 0 \\ 0 \end{Bmatrix}$, the first synchronized signal $Oa(n)$ is equal to the first synchronized signal $Oa(n - 1)$ in the iteration n-1,

• if $Pa(n) \neq \begin{Bmatrix} 0 \\ 0 \end{Bmatrix}$ and if $ra0 = 0$, the first synchronized signal $Oa(n)$ is equal to the control order $Ia(n - 1)$ computed by the first computer in the iteration n-1,

• if $Pa(n) \neq \begin{Bmatrix} 0 \\ 0 \end{Bmatrix}$ and if $ra0 = 1$, the first synchronized signal $Oa(n)$ is equal to the control order $Ia(n - 2)$ computed by the first computer in the iteration n-2;

- a determination submodule (7B) comprised in the second computer (B), configured so as to determine a second synchronized signal $Ob(n)$,

• if $Pb(n) = \begin{Bmatrix} 0 \\ 0 \end{Bmatrix}$, the second synchronized signal $Ob(n)$ is equal to the second synchronized signal $Ob(n - 1)$ in the iteration n-1,

• if $Pb(n) \neq \begin{Bmatrix} 0 \\ 0 \end{Bmatrix}$ and if $rb0 = 0$, the second synchronized signal $Ob(n)$ is equal to the control order $Ib(n - 1)$ computed by the second computer in the iteration n-1,

• if $Pb(n) \neq \begin{Bmatrix} 0 \\ 0 \end{Bmatrix}$ and if $rb0 = 1$, the second synchronized signal $Ob(n)$ is equal to the control order $Ib(n - 2)$ computed by the second computer in the iteration n-2.

8. Assembly as claimed in claim 7,
   **characterized in that** the computing module (2) comprises the following submodules:

   - a first computing submodule (2A) of the first computer (A), configured so as to compute a first bit, the first bit being equal to 0 if the control order $Ia(n)$ computed by the first computer (A) in the iteration n is equal to the control order $Ia(n - 1)$ computed in the iteration n-1, the first bit otherwise being equal to 1;
   - a second computing submodule (2B) of the second computer (B), configured so as to compute a second bit, the second bit being equal to 0 if the control order $Ib(n)$ computed by the second computer (B) in the iteration n is equal to the control order $Ib(n - 1)$ computed in the iteration n-1, the second bit otherwise being equal to 1.

9. Assembly as claimed in claim 8,
   **characterized in that** the exchange module (3) comprises the following submodules:

   - a first transmission submodule (3A) of the first computer (A), configured so as to transmit the first bit to the second computer (B);
   - a second transmission submodule (3B) of the second computer (B), configured so as to transmit the second bit to the first computer (A).

10. Assembly as claimed in any one of claims 7 to 9,
**characterized in that** the signal pair determination module (4) comprises the following submodules:

- a determination submodule (4A) comprised in the first computer (A), configured so as to determine the first bit signal pair $Sa(n) = \begin{Bmatrix} sa0 \\ sa1 \end{Bmatrix}$ in which *sa0* is a first specific bit equal to the first bit computed in the iteration n-1 and *sa1* is a second opposite bit equal to the second bit computed in the iteration n-1;
- a determination submodule (4B) comprised in the second computer (B), configured so as to determine the second bit signal pair $Sb(n) = \begin{Bmatrix} sb0 \\ sb1 \end{Bmatrix}$ in which *sb0* is a second specific bit equal to the second bit computed in the iteration n-1 and *sb1* is a first opposite bit equal to the first bit computed in the iteration n-1.

11. Assembly as claimed in any one of claims 7 to 10,
**characterized in that** the product pair determination module (5) comprises the following submodules:

- a determination submodule (5A) comprised in the first computer (A), configured so as to determine the first bit product pair $Pa(n) = \begin{Bmatrix} pa0 \\ pa1 \end{Bmatrix}$ in which *pa0* is a specific bit and *pa1* is an opposite bit,

- $Pa(n) = \begin{Bmatrix} 1 \\ 1 \end{Bmatrix}$ if $\left( Ra(n-1) = \begin{Bmatrix} 1 \\ 1 \end{Bmatrix} \text{ or } Ra(n-1) = \begin{Bmatrix} 0 \\ 0 \end{Bmatrix} \right)$ and $Sa(n) = \begin{Bmatrix} 1 \\ 1 \end{Bmatrix}$, $Ra(n-1)$ corresponding to a bit remainder pair determined in the iteration n-1,

- $Pa(n) = \begin{Bmatrix} 1 \\ 0 \end{Bmatrix}$ if $\left( Ra(n-1) = \begin{Bmatrix} 0 \\ 1 \end{Bmatrix} \text{ and } Sa(n) = \begin{Bmatrix} 1 \\ 1 \end{Bmatrix} \right)$ or $\left( Ra(n-1) = \begin{Bmatrix} 0 \text{ or } 1 \\ 1 \end{Bmatrix} \right)$ and $Sa(n) = \begin{Bmatrix} 1 \\ 0 \end{Bmatrix} \right)$,

- $Pa(n) = \begin{Bmatrix} 0 \\ 1 \end{Bmatrix}$ if $\left( Ra(n-1) = \begin{Bmatrix} 1 \\ 0 \end{Bmatrix} \text{ and } Sa(n) = \begin{Bmatrix} 1 \\ 1 \end{Bmatrix} \right)$ or $\left( Ra(n-1) = \begin{Bmatrix} 1 \\ 1 \text{ or } 0 \end{Bmatrix} \right)$ and $Sa(n) = \begin{Bmatrix} 0 \\ 1 \end{Bmatrix} \right)$,

- otherwise $Pa(n) = \begin{Bmatrix} 0 \\ 0 \end{Bmatrix}$;

- a determination submodule (5B) of the second computer (B), configured so as to determine the second bit

product pair $Pb(n) = \begin{Bmatrix} pb0 \\ pb1 \end{Bmatrix}$ in which *pb0* is a specific bit and *pb1* is an opposite bit,

- $Pb(n) = \begin{Bmatrix} 1 \\ 1 \end{Bmatrix}$ if $\left( Rb(n-1) = \begin{Bmatrix} 1 \\ 1 \end{Bmatrix} \text{ or } Rb(n-1) = \begin{Bmatrix} 0 \\ 0 \end{Bmatrix} \right)$ and $Sb(n) = \begin{Bmatrix} 1 \\ 1 \end{Bmatrix}$, $Rb(n-1)$ corresponding to a bit remainder pair determined in the iteration n-1,

- $Pb(n) = \begin{Bmatrix} 1 \\ 0 \end{Bmatrix}$ if $\left( Rb(n-1) = \begin{Bmatrix} 0 \\ 1 \end{Bmatrix} \text{ and } Sb(n) = \begin{Bmatrix} 1 \\ 1 \end{Bmatrix} \right)$ or $\left( Rb(n-1) = \begin{Bmatrix} 0 \text{ or } 1 \\ 1 \end{Bmatrix} \right)$ and $Sb(n) = \begin{Bmatrix} 1 \\ 0 \end{Bmatrix} \right)$,

- $Pb(n) = \begin{Bmatrix} 0 \\ 1 \end{Bmatrix}$ if $\left( Rb(n-1) = \begin{Bmatrix} 1 \\ 0 \end{Bmatrix} \text{ and } Sb(n) = \begin{Bmatrix} 1 \\ 1 \end{Bmatrix} \right)$ or $\left( Rb(n-1) = \begin{Bmatrix} 1 \\ 1 \text{ or } 0 \end{Bmatrix} \right)$ and $Sb(n) = \begin{Bmatrix} 0 \\ 1 \end{Bmatrix} \right)$,

$$\bullet \text{ otherwise } \quad Pb(n) = \begin{Bmatrix} 0 \\ 0 \end{Bmatrix}.$$

12. Assembly as claimed in any one of claims 7 to 11,
    **characterized in that** the remainder pair determination module (6) comprises the following submodules:

    - a determination submodule (6A) comprised in the first computer (A), configured so as to determine the first bit remainder pair $Ra(n)$ in which $ra0$ is a specific bit, $ra1$ is an opposite bit and $Ra(n) = Sa(n)$ XOR $Pa(n)$ ;
    - a determination submodule (6B) comprised in the second computer (B), configured so as to determine the second bit remainder pair $Rb(n)$ in which $rb0$ is a specific bit, $rb1$ is an opposite bit and $Rb(n) = Sb(n)$ XOR $Pb(n)$.

13. Flight control system for an aircraft,
    which comprises at least one assembly such as the one specified in any one of claims 8 to 12.

14. Aircraft,
    which comprises a flight control system such as the one specified in claim 13.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 19206101

- EP 2717108 A1